(19) Europäisches Patentamt
European Patent Office
Office européen des brevets

(11) **EP 4 664 980 A1**

(12) **EUROPEAN PATENT APPLICATION**
published in accordance with Art. 153(4) EPC

(43) Date of publication:
**17.12.2025  Bulletin 2025/51**

(21) Application number: **23920441.5**

(22) Date of filing: **09.02.2023**

(51) International Patent Classification (IPC):
***H04W 28/02*** *(2009.01)*

(52) Cooperative Patent Classification (CPC):
**H04W 28/02**

(86) International application number:
**PCT/CN2023/075221**

(87) International publication number:
**WO 2024/164233 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Yapu
  Dongguan, Guangdong 523860 (CN)**
• **GAO, Ning
  Dongguan, Guangdong 523860 (CN)**
• **LUO, Chaoming
  Dongguan, Guangdong 523860 (CN)**

(74) Representative: **Mewburn Ellis LLP
Aurora Building
Counterslip
Bristol BS1 6BX (GB)**

(54) **WIRELESS COMMUNICATION METHOD, SENDING END DEVICE, AND RECEIVING END DEVICE**

(57)    A method of wireless communication, a transmitting device, and a receiving device are provided. The method includes the following. A transmitting device transmits a first physical layer protocol data unit (PPDU) and a second PPDU on a first transmission opportunity (TXOP), where the first PPDU is used for transmitting first-type traffic data, the second PPDU is used for transmitting second-type traffic data, and a latency requirement of the second-type traffic data is higher than a latency requirement of the first-type traffic data.

<u>200</u>

| Transmitting device | Receiving device |
| --- | --- |

S210，first PPDU and second PPDU, where the first PPDU is used for transmitting first-type traffic data, the second PPDU is used for transmitting second-type traffic data, and a latency requirement of the second-type traffic data is higher than that of the first-type traffic data

FIG. 4

EP 4 664 980 A1

**Description**

TECHNICAL FIELD

Embodiments of the present disclosure relate to the field of communication, and specifically to a method of wireless communication, a transmitting device, and a receiving device.

BACKGROUND

In Wireless Fidelity (Wi-Fi) systems, when a physical layer protocol data unit (PPDU) is transmitted, a receiving device can decode a data portion of the PPDU based on parameters indicated in the received PPDU. Low latency is a goal pursued by Wi-Fi systems, and how to achieve the transmission of low-latency traffics in PPDU transmission is an urgent problem to be solved.

SUMMARY

Embodiments of the present disclosure provide a method of wireless communication, a transmitting device, and a receiving device, which are conducive to meeting transmission requirements of low-latency traffics.

In a first aspect, a method of wireless communication is provided. The method includes the following. A transmitting device transmits a first physical layer protocol data unit (PPDU) and a second PPDU on a first transmission opportunity (TXOP), where the first PPDU is used for transmitting first-type traffic data, the second PPDU is used for transmitting second-type traffic data, and a latency requirement of the second-type traffic data is higher than a latency requirement of the first-type traffic data.

In a second aspect, a method of wireless communication is provided. The method includes the following. A transmitting device transmits a time aggregate PPDU (TA-PPDU) on a first TXOP, where the TA-PPDU includes $N$ PPDUs, each PPDU includes a preamble field and a data field, and the preamble field of the $K$-th PPDU of the $N$ PPDUs includes some fields in the preamble field of the first PPDU of the $N$ PPDUs, where $2 \leq k \leq n$, and $N$ is a positive integer greater than 1.

In a third aspect, a method of wireless communication is provided. The method includes the following. A receiving device receives a first PPDU and a second PPDU sent by a transmitting device, where the first PPDU is used for transmitting first-type traffic data, the second PPDU is used for transmitting second-type traffic data, and a latency requirement of the second-type traffic data is higher than that a latency requirement the first-type traffic data.

In a fourth aspect, a method of wireless communication is provided. The method includes the following. A receiving device receives a TA-PPDU sent by a transmitting device on a first TXOP, where the TA-PPDU includes $N$ PPDUs, each PPDU includes a preamble field and a data field, and the preamble field of the $K$-th PPDU of the $N$ PPDUs includes some fields in the preamble field of the first PPDU of the $N$ PPDUs, where $2 \leq k \leq n$, and $N$ is a positive integer greater than 1.

In a fifth aspect, a transmitting device is provided for performing the method according to the first aspect or any implementation thereof.

Specifically, the transmitting device includes functional modules for performing the method according to the first or second aspect or implementations thereof.

In a sixth aspect, a receiving device is provided for performing the method according to the second aspect or any implementation thereof.

Specifically, the receiving device includes functional modules for performing the method according to the third or fourth aspect or implementations thereof.

In a seventh aspect, a transmitting device is provided, including a processor and a memory. The memory is configured to store a computer program, and the processor is configured to invoke and run the computer program stored in the memory to perform the method according to the first or second aspect or their implementations.

In an eighth aspect, a receiving device is provided, including a processor and a memory. The memory is configured to store a computer program, and the processor is configured to invoke and run the computer program stored in the memory to perform the method according to the third or fourth aspect or their implementations.

In a ninth aspect, a chip is provided for implementing the method according to any of the first to fourth aspects or their implementations.

Specifically, the chip includes a processor for invoking and running a computer program from the memory, enabling a device equipped with the chip to perform the method according to any of the first to fourth aspects or their implementations.

In a tenth aspect, a computer-readable storage medium is provided for storing a computer program which, when executed by a computer, performs the method according to any of the first to fourth aspects or their implementations.

In an eleventh aspect, a computer program product is provided, including computer program instructions that, when executed by a computer, perform the method according to any of the first to fourth aspects or their implementations.

In a twelfth aspect, a computer program is provided, which, when run on a computer, causes the computer to perform the method according to any of the first to fourth aspects or their implementations.

According to the above technical solutions, the transmitting device can use the resources for transmitting the first-type traffic data to transmit the second-type traffic data, where the latency requirement of the first-type traffic data is lower than that of the second-type traffic data, thereby ensuring timely transmission of latency-sensitive traffics and meeting the latency requirements.

BRIEF DESCRIPTION OF THE DRAWINGS

FIG. 1 is a schematic diagram of a communication system architecture provided by embodiments of the present disclosure.

FIG. 2 is a schematic diagram of a frame format of a UHR MU PPDU.

FIG. 3 is a schematic diagram of a frame format of an A-MPDU.

FIG. 4 is a schematic interaction diagram of a method of wireless communication provided by embodiments of the present disclosure.

FIG. 5 is a schematic format diagram of a first PPDU according to an embodiment of the present disclosure.

FIG. 6 is a schematic diagram illustrating PPDU transmission according to an embodiment of the present disclosure.

FIG. 7 is a schematic diagram illustrating PPDU transmission according to another embodiment of the present disclosure.

FIG. 8 is a schematic diagram illustrating PPDU transmission according to yet another embodiment of the present disclosure.

FIG. 9 is a schematic diagram of a frame format of a third PPDU provided by embodiments of the present disclosure.

FIG. 10 is a schematic interaction diagram of another method of wireless communication provided by embodiments of the present disclosure.

FIG. 11 is a schematic diagram of a frame format of a TA-PPDU provided by embodiments of the present disclosure.

FIG. 12 is a schematic diagram of another frame format of a TA-PPDU provided by embodiments of the present disclosure.

FIG. 13 is a schematic diagram of yet another frame format of a TA-PPDU provided by embodiments of the present disclosure.

FIG. 14 is a schematic block diagram of a transmitting device provided by embodiments of the present disclosure.

FIG. 15 is a schematic block diagram of a receiving device provided by embodiments of the present disclosure.

FIG. 16 is a schematic block diagram of another transmitting device provided by embodiments of the present disclosure.

FIG. 17 is a schematic block diagram of another receiving device provided by embodiments of the present disclosure.

FIG. 18 is a schematic block diagram of a communication device provided by embodiments of the present disclosure.

FIG. 19 is a schematic block diagram of a chip provided by embodiments of the present disclosure.

FIG. 20 is a schematic block diagram of a communication system provided by embodiments of the present disclosure.

DETAILED DESCRIPTION

The following describes the technical solutions of the embodiments of the present disclosure with reference to the accompanying drawings in the embodiments of the present disclosure. It should be clear that the described embodiments are only a part of the embodiments of the present disclosure, rather than all of the embodiments. Any other embodiments obtained by a person of ordinary skill in the art without creative work are within the scope of protection of the present disclosure.

The technical solutions of the embodiments of the present disclosure can be applied to various communication systems, such as wireless local area networks (WLAN), wireless fidelity (Wi-Fi), or other communication systems.

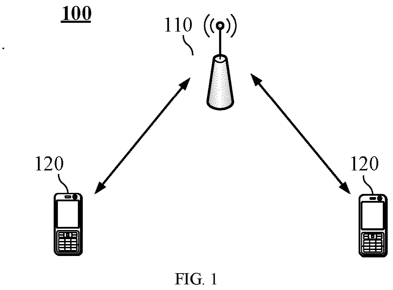

For example, a communication system 100 applied in the embodiments of the present disclosure is illustrated in FIG. 1. The communication system 100 may include an access point (AP) 110 and a station (STA) 120 that accesses a network through the AP 110.

In some scenarios, the AP may also be referred to as an AP STA, that is, in a certain sense, the AP is also a type of STA.

In some scenarios, the STA may also be referred to as a non-AP STA.

Communication in the communication system 100 may be between the AP and the non-AP STA, between non-AP STAs, or between the STA and a peer STA. Here, the peer STA may refer to a device that communicates peer-to-peer with the STA. for example, the peer STA may be an AP or a non-AP STA.

The AP acts as a bridge connecting wired and wireless networks, with a main function to connect various wireless network clients together and then connect the wireless network to the Ethernet. The AP device can be a terminal device with a Wi-Fi chip (such as a mobile phone) or a network device (such as a router).

It should be understood that the role of the STA in the communication system is not absolute. For example, in some scenarios, when a mobile phone is connected to a router, the mobile phone is a non-AP STA. However, when the mobile phone acts as a hotspot for other mobile phones, the mobile phone assumes the role of an AP.

The AP and non-AP STA can be devices applied in vehicle-to-everything (V2X) communications, Internet of Things (IoT) nodes, sensors, and the like in IoT, smart cameras, smart remote controllers, smart water and electricity meters, and the like in smart homes, and sensors and the like in smart cities.

In some embodiments, the non-AP STA may support the 802.11be standard. The non-AP STA may also support a variety of current and future WLAN standards within the 802.11 family, such as 802.11ax, 802.11ac, 802.11n, 802.11g, 802.11b, and 802.11a.

In some embodiments, the AP may be a device supporting the 802.11be standard. The AP may also be a device supporting a variety of current and future WLAN standards within the 802.11 family, such as 802.11ax, 802.11ac, 802.11n, 802.11g, 802.11b, and 802.11a.

In the embodiments of the present disclosure, the STA may be a mobile phone, pad, computer, virtual reality (VR) device, augmented reality (AR) device, wireless device in industrial control, set-top box, wireless device in self-driving, vehicle communication device, wireless device in remote medical, wireless device in smart grid, wireless device in transportation safety, wireless device in smart city, or wireless device in smart home that supports WLAN or Wi-Fi technology, or a wireless communication chip/ASIC/SOC/etc.

Frequency bands supported by WLAN technology may include, but are not limited to: low frequency bands (e.g., 2.4GHz, 5GHz, 6GHz) and high frequency bands (e.g., 60GHz).

FIG. 1 illustrates an example of one AP STA and two non-AP STAs. Optionally, the communication system 100 may include multiple AP STAs and other numbers of non-AP STAs. The embodiments of the present disclosure do not limit this.

It should be understood that devices with communication functions in the network/system of the embodiments of the present disclosure may be referred to as communication devices. Taking the communication system 100 illustrated in FIG. 1 as an example, the communication devices may include the AP 110 and the STA 120 with communication functions. The AP 110 and the STA 120 may be the specific devices mentioned above, and will not be repeated here. The communication devices may also include other devices in the communication system 100, such as network controllers, gateways, and other network entities. The embodiments of the present disclosure do not limit this.

It should be understood that the terms "system" and "network" are often interchangeable in this document. The term "and/or" in this document merely describes an association between associated objects, indicating that there may be three relationships. For example, A and/or B may indicate: the existence of A alone, the simultaneous existence of A and B, and the existence of B alone. In addition, the character "/" in this document generally indicates an "or" relationship between the associated objects before and after it.

It should be understood that the term "indicate" mentioned in the embodiments of the present disclosure may be direct indication, indirect indication, or indication of an association. For example, A indicates B, which may mean that A directly indicates B, such as B being obtained through A; it may also mean that A indirectly indicates B, such as A indicating C, and B being obtained through C; it may also mean that there is an association between A and B.

In the description of the embodiments of the present disclosure, the term "correspond" may indicate a direct or indirect correspondence between two entities, an association between them, or a relationship of indication and being indicated, configuration and being configured, etc.

In the embodiments of the present disclosure, "predefined" may be implemented by pre-saving corresponding codes, tables, or other means that can indicate relevant information in devices (such as APs and STAs). The present disclosure does not limit the specific implementation method. For example, predefined may refer to definitions in a protocol.

To facilitate the understanding of the technical solutions of the embodiments of the present disclosure, the following explains the related terms of the present disclosure.

Association Identifier (AID): used to identify a STA that has established an association with an AP.

Medium Access Control (MAC): the abbreviation for medium access control address.

Transmission Opportunity (TXOP): refers to a period of time during which a device that owns this transmission opportunity can initiate one or more transmissions.

To facilitate the understanding of the technical solutions of the embodiments of the present disclosure, the following explains the related ultra-high reliability (UHR) multi-user (MU) PPDU transmission of the present disclosure.

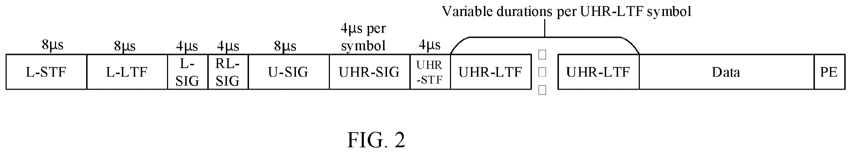

FIG. 2 illustrates a frame format of a UHR MU PPDU, which is used to send data to one or more stations. In the UHR MU PPDU, a Non-HT Short Training field (L-STF) is mainly used for signal detection, automatic gain control, time synchronization, and coarse frequency offset estimation; a Non-HT Long Training field (L-LTF) is mainly used for channel estimation and further frequency offset estimation; a Non-HT SIGNAL field (L-SIG) is used to transmit rate and length information; a Repeated L-SIG (RL-SIG) field is a repetition of the L-SIG; a Universal SIGNAL field (U-SIG) and a UHR SIGNAL field (UHR-SIG) are used to carry information for decoding the PPDU; a UHR Short Training field (UHR-STF) is used to improve the automatic gain control estimation in MIMO transmission; a UHR Long Training field (UHR-LTF) is used for MIMO channel estimation from constellation mapping output to a receive chain; a Data field is used for transmitting data; a Packet Extension field (PE) is the extension of the packet. In the UHR MU PPDU, the L-STF field, L-LTF field, L-SIG field, RL-SIG field, U-SIG field, and UHR-SIG field are called pre-UHR modulation fields; the UHR-STF field, UHR-LTF field, Data field, and PE field are called UHR modulation fields.

For a UHR PPDU, each UHR-LTF symbol has the same Guard Interval (GI) duration as a data symbol, which can be 0.8 $\mu$s, 1.6 $\mu$s, or 3.2 $\mu$s. The UHR-LTF includes three types: 1x Extremely high throughput Long Training field (EHT-LTF), 2x EHT-LTF, and 4x EHT-LTF. The durations of 1x EHT-LTF, 2x EHT-LTF, and 4x EHT-LTF symbol without GI are 3.2 $\mu$s, 6.4 $\mu$s, and 12.8 $\mu$s, respectively. The duration of each data symbol without GI is 12.8 $\mu$s. The PE duration of the UHR PPDU is 0 $\mu$s, 4 $\mu$s, 8 $\mu$s, 12 $\mu$s, 16 $\mu$s, or 20 $\mu$s.

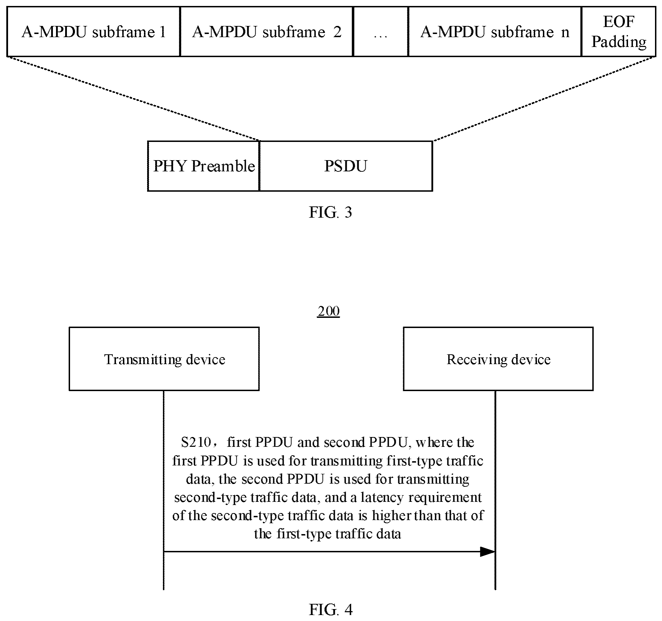

In some scenarios, when performing PPDU transmission, as illustrated in FIG. 3, a MAC entity of the transmitting device can send a complete A-MPDU composed of multiple Aggregate Medium Access Control Protocol Data Unit (A-MPDU) subframes to a Physical Layer (PHY) entity, and the PHY entity uses one PPDU to transmit the complete A-MPDU. The situation where the MAC entity sends A-MPDU subframes while the PHY entity is transmitting the PPDU will not occur. If the A-MPDU subframe is used as the minimum transmission unit, when a data frame with higher transmission priority interrupts the current PPDU transmission, it will lead to the inability to correctly decode the data of the entire PPDU. Since the minimum data unit of the PHY entity is the PPDU, that is, the A-MPDU composed of several A-MPDU subframes from the MAC entity is carried in one PPDU in the PHY entity for transmission, if n A-MPDU subframes are interrupted, it will be reflected on the PHY entity side that the data field in the PPDU is interrupted at any time, which will lead to the inability to correctly decode both data fields that have been transmitted and have not been transmitted.

Therefore, in PPDU transmission, how to transmit a low-latency traffic when the low-latency traffic arrives is an urgent problem to be solved.

To facilitate the understanding of the technical solutions of the embodiments of the present disclosure, the following describes the technical solutions of the present disclosure in detail through specific examples. The following related technologies can be combined with the technical solutions of the embodiments of the present disclosure in any manner, and all of them fall within the scope of protection of the embodiments of the present disclosure. The embodiments of the present disclosure include at least some of the following content.

FIG. 4 is a schematic interaction diagram of a method of wireless communication 200 according to the embodiments of the present disclosure. As illustrated in FIG. 4, the method 200 includes at least some of the following content.

S210, a transmitting device transmits a first PPDU and a second PPDU on a first TXOP, where the first PPDU is used for transmitting first-type traffic data, and the second PPDU is used for transmitting second-type traffic data.

In some embodiments, a latency requirement of the second-type traffic data is higher than a latency requirement of the first-type traffic data.

For example, the second-type traffic data is latency-sensitive (LS) traffic data, or, in other words, low-latency traffic data, while the first-type traffic data is non-latency-sensitive traffic data.

In some other embodiments, a priority of the second-type traffic data is higher than that of the first-type traffic data.

For example, the first-type traffic data is low-priority traffic data, while the second-type traffic data is high-priority traffic data.

In some embodiments, the transmitting device acquires the first TXOP for transmitting the first-type traffic data.

Therefore, in the embodiments of the present disclosure, the transmitting device can use (or, in other words, preempt) a resource for transmitting the first-type traffic data to transmit the second-type traffic data. By preempting the resource of a non-latency-sensitive traffic to transmit a latency-sensitive traffic, it is conducive to ensuring timely transmission of the latency-sensitive traffic and meeting the latency requirement of the latency-sensitive traffic.

In some embodiments, the second PPDU is transmitted after the first PPDU.

For example, during the transmission of the first-type traffic data, if the second-type traffic data arrives, the transmitting device can interrupt the transmission of the first-type traffic data and prioritize the transmission of the second-type traffic data.

In some other embodiments, the second PPDU is transmitted before the first PPDU.

For example, if the second-type traffic data arrives before the transmission of the first-type traffic data begins, the transmitting device can first transmit the second-type traffic data, and then transmit the first-type traffic data after the second-type traffic data has been transmitted.

In some embodiments, the transmitting device is an access point device, and a target receiving device of the first PPDU includes one station device.

That is, the embodiments of the present disclosure can be applied to resource preemption in downlink (DL) single-user (SU) transmission.

In some embodiments, the transmitting device is an access point device, and the target receiving device of the first PPDU includes $X$ station devices, where $X$ is a positive integer greater than 1. That is, the embodiments of the present disclosure can be applied to resource preemption in downlink (DL) multi-user (MU) transmission.

In some embodiments, the PPDU transmission in the DL MU may include orthogonal frequency division multiple access (OFDMA) PPDU transmission involving multiple station devices.

In some embodiments, the transmitting device is a station device, and the target receiving device of the first PPDU includes one access point device.

That is, the embodiments of the present disclosure can be applied to resource preemption in uplink (UL) single-user (SU) transmission.

In some embodiments, the PPDU transmission in UL SU may include Trigger Based (TB) PPDU transmission, or PPDU in uplink orthogonal frequency division multiple access based random access (UORA).

It should be understood that in the embodiments of the present disclosure, the access point device may refer to an AP, or an AP STA, and the station device may refer to a STA, or a non-AP STA.

In some embodiments, a target receiving device of the second PPDU includes a portion or all of the target receiving devices of the first PPDU.

For example, in DL SU transmission, the target receiving device of the second PPDU includes one station device.

For example, in DL MU transmission, the target receiving device of the second PPDU includes $Y$ station devices, where $Y$ is a positive integer. Optionally, $X \geq Y$, for example, the $Y$ station devices include a portion or all of the $X$ station devices.

For another example, in UL SU transmission, the target receiving device of the second PPDU includes one access point device.

In some embodiments, there is a station device in the target receiving devices of the second PPDU (including $Y$ station devices) other than the target receiving devices of the first PPDU (including $X$ station devices).

In some scenarios, $Y$ is greater than $X$, and the $Y$ station devices include the $X$ station devices and additional $Y$-$X$ station devices. For example, the $X$ station devices include STA1 and STA2, and the $Y$ station devices include STA1, STA2, STA3, and STA4.

In some other scenarios, the $Y$ station devices include $P$ station devices of the $X$ station devices and additional $Y$-$P$ station devices, where $P$ is a positive integer. For example, the $X$ station devices include STA1 and STA2, and the $Y$ station devices include STA1, STA3, and STA4.

In some other scenarios, the $X$ station devices and the $Y$ station devices do not overlap at all. For example, the $X$ station devices include STA1 and STA2, and the $Y$ station devices include STA3 and STA4.

In some embodiments, when the target receiving device of the second PPDU includes station devices other than the target receiving device of the first PPDU, these station devices need to be woken up to receive the second-type traffic data.

In some embodiments, a PHY entity of the transmitting device can obtain a parameter(s) for PPDU transmission from a MAC entity of the transmitting device. For example, the PHY entity can receive a first primitive from the MAC entity, such as physical layer management entity-transmission time.request primitive (PLME-TXTIME.request primitive). The first primitive includes a parameter(s) for PPDU transmission, such as a bandwidth of the PPDU, resource unit (RU) allocation, number of spatial streams, modulation and coding scheme (MCS), nominal packet padding, A-MPDU pre-end-of-frame (EOF) padding (A-MPDU pre-EOF padding, APEP) length (APEP_LENGTH), that is, the number of bytes of A-MPDU pre-EOF padding carried in a physical layer traffic data unit (PSDU), etc.

In some embodiments, the first-type traffic data is predetermined (scheduled) to be transmitted through $N_{seg}$ segments, where $N_{seg}$ is a positive integer greater than 1.

Optionally, $N_{seg}$ can be predefined, or indicated by the transmitting device to the receiving device, or indicated by the receiving device to the transmitting device, or determined through negotiation between the transmitting device and the receiving device. That is, the transmitting device and the receiving device have a consistent understanding of the number of segments.

In some embodiments, the first PPDU includes $N_{seg,tx}$ segments out of the $N_{seg}$ segments, where the $N_{seg,tx}$ segments are transmitted before the second PPDU, and $N_{seg,tx}$ is a positive integer.

In some scenarios, during transmission of the PPDU carrying the first-type traffic data, the second-type traffic data arrives. For example, the second-type traffic data arrives during transmission of a first segment out of the $N_{seg}$ segments, and the first segment is not the final segment of the $N_{seg}$ segments. In this case, the transmitting device can transmit the PPDU carrying the second-type traffic data after the first segment has been transmitted. Under this circumstance, the first PPDU includes the first segment and all segments preceding the first segment.

In some other scenarios, during the transmission of the PPDU carrying the first-type traffic data, the second-type traffic data arrives. For example, the second-type traffic data arrives during transmission of a second segment out of the

$N_{seg}$ segments, and the second segment is the final segment of the $N_{seg}$ segments. In this case, the transmitting device can transmit the PPDU carrying the second-type traffic data after the PPDU carrying the first-type traffic data has been transmitted. Under this circumstance, the first PPDU includes all segments of the first-type traffic data.

In some embodiments, the first-type traffic data is transmitted through $N_{seg}$ segments when the number of time-domain symbols $N_{SYS}^{seg}$ used to transmit one segment is greater than a first symbol threshold $N_{SYS\,min}^{seg}$.

Optionally, $N_{SYS\,min}^{seg}$ can be predefined, or indicated by the transmitting device to the receiving device, or indicated by the receiving device to the transmitting device, or determined through negotiation between the transmitting device and the receiving device. That is, the transmitting device and the receiving device have a consistent understanding of $N_{SYS\,min}^{seg}$.

Optionally, $N_{SYS\,min}^{seg}$ can be 50, 100, etc. The present disclosure does not limit this.

In some embodiments, the time-domain symbol may refer to an orthogonal frequency division multiplexing (OFDM) symbol.

In some embodiments of the present disclosure, the method 200 further includes the following.

The transmitting device determines the number of bits $N_{tail,u}$ of a tail field of an encoder of the target receiving device of the first-type traffic data according to the number of segments $N_{seg}$ used to transmit the first-type traffic data.

The transmitting device determines the number of time-domain symbols $N_{SYS}$ required to transmit the first-type traffic data according to the number of bits $N_{tail,u}$.

The number of time-domain symbols $N_{SYS}^{seg}$ used to transmit one segment is determined according to $N_{SYS}$ and $N_{seg}$.

It should be understood that in the embodiments of the present disclosure, the number of time-domain symbols $N_{SYS}$ required to transmit the first-type traffic data may refer to the number of time-domain symbols $N_{SYS}$ required to transmit all segments of the first-type traffic data (i.e., $N_{seg}$ segments).

In some embodiments, the number of bits $N_{tail,u}$ is equal to $N_{seg} * N_{tail,u,init}$, where $N_{tail,u,init}$ represents the number of bits of the tail field of the encoder (e.g., BCC encoder) of the target receiving device u when the first-type traffic data is not segmented.

In some embodiments, $N_{tail,u,init}$ can be 6 bits, and these 6 bits can be set to 0 to return the encoder of the target receiving device u to a zero state, so as to improve the error probability of the convolutional encoder.

In some embodiments, $N_{tail,u}$ is determined according to the above method when the target receiving device uses a BCC encoder.

Therefore, in the embodiments of the present disclosure, the transmitting device can determine the number of bits of the tail field of the BCC encoder of the receiving device based on the number of segments of the first-type traffic data, and further prepare the PPDU according to this number of bits. In this way, even if the transmission of the first-type traffic data is interrupted by the transmission of the second-type traffic data, it can be ensured that OFDM symbols in the segments of the first-type traffic data that have already been transmitted can be completely received and decoded, ensuring the integrity of the first-type traffic data.

In some embodiments, the number of time-domain symbols $N_{SYS}$ required to transmit the first-type traffic data is determined based on the number of bits $N_{tail,u}$ as follows.

The number of time-domain symbols $N_{SYS}$ required to transmit the first-type traffic data for each target receiving device is determined according to the number of bits $N_{tail,u}$ and the APEP_LENGTHu of each target receiving device.

In some embodiments, the transmitting device can also determine a packet extension time $T_{PE}$ based on the number of bits $N_{tail,u}$, for example, determining the packet extension time $T_{PE}$ based on the number of bits $N_{tail,u}$ and the APEP_LENGTHu of each target receiving device.

In some embodiments, the number of time-domain symbols $N_{SYS}^{seg}$ used to transmit one segment is determined according to $N_{SYS}$ and $N_{seg}$ as follows.

A result of $N_{SYS}$ divided by $N_{seg}$ is rounded to obtain the number of time-domain symbols $N_{SYS}^{seg}$ used to transmit one segment.

Optionally, the rounding here can include rounding up (ceil). That is,

$$N_{SYS}^{seg} = \text{ceil}\left(\frac{N_{SYM}}{N_{seg}}\right).$$

In some embodiments, when $N_{SYS}^{seg} \leq N_{SYS\,min}^{seg}$, the transmitting device does not segment the first-type traffic data. In this case, if the second-type traffic data arrives during the transmission of the PPDU carrying the first-type traffic data, it is necessary to wait for the transmission of the PPDU carrying the first-type traffic data to be completed before transmitting the PPDU carrying the second-type traffic data.

In some embodiments, when $N_{SYS}^{seg} > N_{SYS\,min}^{seg}$, the transmitting device segments the first-type traffic data, and the PPDU carrying the first-type traffic data can include multiple PSDU segments. If the second-type traffic data arrives during the transmission of the PPDU carrying the first-type traffic data, the transmission of this PPDU needs to be interrupted to prioritize the transmission of the PPDU carrying the second-type traffic data.

In some embodiments, the first PPDU includes a first preamble field and a data field, where the first preamble field is used to indicate decoding information for the data field, and the data field is used to carry at least one segment of the first-type traffic data.

In some embodiments, the first preamble field includes the following fields: L-STF field, L-LTF field, L-SIG field, RL-SIG field, U-SIG field, UHR-SIG field, UHR-STF field, and UHR-LTF field.

The following describes the process of preparing the first PPDU and the second PPDU with specific examples.

Step 1, the PHY entity of the transmitting device reports a transmission time $T_{PPDU}$ of the PPDU carrying the first-type traffic data (referred to as the original PPDU, that is, the PPDU carrying the complete first-type traffic data) to the MAC entity.

For example, $T_{PPDU} = T_{preamble} + N_{SYM} \times T_{SYM} + T_{PE} + SignalExtension$.

In the above, $T_{preamble}$ represents the time required to transmit a preamble field of the original PPDU, $T_{SYM}$ is the duration of one OFDM symbol.

In some embodiments, $T_{preamble} = T_{L-STF} + T_{L-LTF} + T_{L-SIG} + T_{RL-SIG} + T_{U-SIG} + T_{UHR-SIG} + T_{UHR-STF} + T_{UHR-LTF}$.

In the above, $T_{L-STF}$ represents the time required to transmit the L-STF field, $T_{L-LTF}$ represents the time required to transmit the L-LTF field, $T_{L-SIG}$ represents the time required to transmit the L-SIG field, $T_{RL-SIG}$ represents the time required to transmit the RL-SIG field, $T_{U-SIG}$ represents the time required to transmit the U-SIG field, $T_{UHR-SIG}$ represents the time required to transmit the UHR-SIG field, $T_{UHR-STF}$ represents the time required to transmit the UHR-STF field, $T_{UHR-LTF}$ represents the time required to transmit the UHR-LTF field.

In some embodiments, if an operating frequency band of a basic service set (BSS) is 5GHz or 6GHz, SignalExtension = 0μs; or, if the operating frequency band of the BSS is 2.4GHz, SignalExtension = 6μs.

Step 2: The PHY entity of the transmitting device prepares the original PPDU. For example, prepare a PPDU including a preamble field, a data field, a packet extension field, and SignalExtension.

For example, when the receiving device uses BCC coding, the data field contains one SERVICE field and $N_{seg}$ PSDU segments with tail fields.

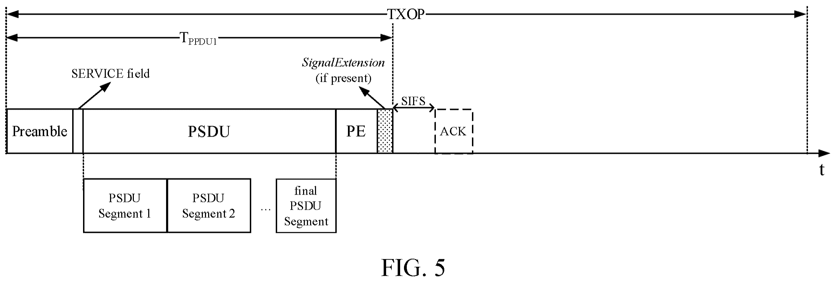

For another example, as illustrated in FIG. 5, when the receiving device does not use BCC coding, the data field contains one SERVICE field and $N_{seg}$ PSDU segments.

Step 3: When the second-type traffic data arrives, the MAC entity of the transmitting device can send a second primitive to the PHY entity, such as the PLME-LatencySensitivePPDU.request primitive, to inform the PHY entity that a PPDU will preempt the resources of the current PPDU. If the segment being transmitted in the original PPDU is the first segment and this first segment is not the final segment, then the transmitting device can update the current remaining number of time-domain symbols $N_{SYS,current}^{seg}$ after transmitting the first segment, that is, subtract the number of time-domain symbols occupied by the first segment from the remaining number of time-domain symbols before transmitting the first segment, where $\text{floor}\left(\dfrac{N_{SYS,current}^{seg}}{N_{SYS}^{seg}}\right) > 0$ indicates that the first segment is not the final segment, or in other words, the remaining number of time-domain symbols $N_{SYS,current}^{seg}$ is sufficient to transmit at least one more segment.

Further, after the transmission of the first segment is completed, the transmitting device sends the second PPDU. In the case where the original PPDU is interrupted by the second-type traffic data, the transmitted PPDU becomes the first PPDU.

In some embodiments, the first segment includes a first sequence or a specific waveform to indicate that the second-type traffic data will be transmitted after the first sequence. That is, before sending the PPDU carrying the second-type traffic data, the transmitting device can insert the first sequence in the final segment of the transmitted PPDU to indicate that the subsequent PPDU will carry the second-type traffic data.

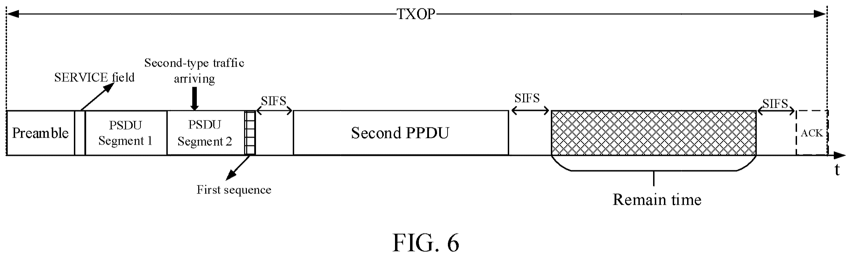

As illustrated in FIG. 6, when the second-type traffic data arrives during transmission of PSDU segment 2 of the first-type traffic data, the transmitting device can insert a first sequence in PSDU segment 2 to indicate that the subsequent PPDU will carry the second-type traffic data. Further, after the transmission of PSDU segment 2 is completed, the second PPDU is transmitted, for example, after a short interframe space (SIFS) following the transmission of PSDU segment 2, the second PPDU is transmitted.

In some embodiments, the first sequence can be predefined, or indicated by the transmitting device to the receiving device, or indicated by the receiving device to the transmitting device, or determined through negotiation between the transmitting device and the receiving device. That is, the transmitting device and the receiving device have a consistent understanding of the first sequence.

In some embodiments, the first sequence can be an L-STF sequence, for example, an L-STF sequence with phase rotation.

In some embodiments, the frequency-domain position and size occupied by the first sequence are the same as the frequency-domain position and size occupied by the first-type traffic data. By designing the frequency-domain position and size occupied by the first sequence to be the same as those occupied by the first-type traffic data, the receiving complexity at the receiving end can be reduced.

In some embodiments, the first sequence occupies $K$ time-domain symbols, where $K$ is a positive integer. For example, the first sequence occupies the final $K$ time-domain symbols of the $N_{SYS}^{seg}$ time-domain symbols occupied by the first segment.

In some embodiments, a duration of the time-domain symbols and a duration of the Guard Interval (GI) occupied by the first sequence are the same as a duration of the time-domain symbols and a duration of the GI occupied by the data field. By designing the duration of the OFDM symbols and the duration of the GI occupied by the first sequence to be the same as those occupied by the data field, the receiving complexity at the receiving end can be reduced.

In some embodiments, for DL SU and UL SU PPDU transmissions, the transmitting device transmits the PPDU carrying the second-type traffic data, that is, the second PPDU, after a SIFS interval following the transmission of the first PPDU. The frequency-domain position and size occupied by the second PPDU can be the same as those occupied by the first PPDU.

The following describes the PPDU design in DL MU transmission with specific examples.

Manner 1: The second PPDU is used only for transmitting the second-type traffic data.

In DL MU PPDU transmission, the transmitting device is an access point device, and the target receiving device of the first PPDU is $X$ station devices. The access point device can transmit the second PPDU on all resource units allocated by the access point device to the $X$ station devices, where $X$ is a positive integer greater than 1. The second PPDU is used to carry the second-type traffic data for $Y$ station devices, where $Y$ is a positive integer.

Therefore, in this manner 1, the access point device reallocates the resources originally allocated to the $X$ station devices to the $Y$ station devices for the transmission of the second-type traffic data for the $Y$ station devices. In this case, the new RU allocation can be obtained from a preamble of the second PPDU.

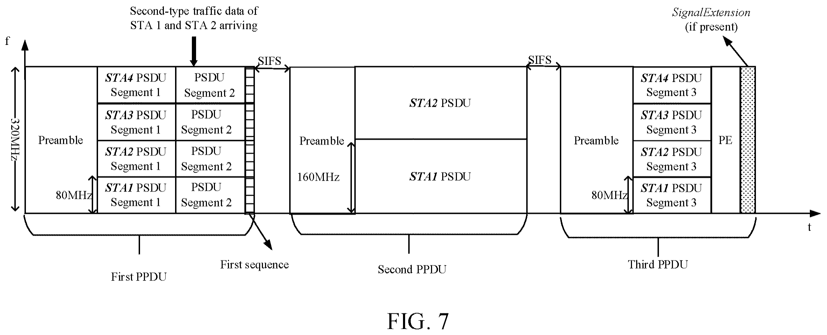

In a specific scenario, if there are $X$ STAs participating in OFDMA transmission, and $Y$ STAs have the second-type traffic data arriving, then all the RUs or Multiple Resource Units (MRUs) of the second PPDU are allocated to the $Y$ STAs having the second-type traffic data. Taking FIG. 7 as an example, in a 320MHz OFDMA PPDU, in the order of increasing frequency, the RUs of STA 1 to STA 4 are respectively on the 1st to 4th 80MHz sub-channels. When the second-type traffic data arrives at STA 1 and STA 2, the second PPDU will be transmitted after the SIFS time. In the new RU allocation, STA1 occupies the 1st and 2nd 80MHz sub-channels, and STA2 occupies the 3rd and 4th 80MHz sub-channels. Therefore, the AP transmits the second-type traffic data for STA1 on the 1st 160MHz sub-channel and transmits the second-type traffic data for STA2 on the 2nd 160MHz sub-channel. In FIG. 7, the second-type traffic data arrives at PSDU Segment 2, so a first sequence is inserted in PSDU Segment 2. The frequency domain resources occupied by the first sequence can be 320MHz, and the duration of the OFDM symbols and the duration of the GI occupied by the first sequence are the same as those occupied by the data field.

In some embodiments, when receiving the second PPDU, the $X$ station devices can determine, based on a preamble of the second PPDU, whether a data field includes second-type traffic data intended for the $X$ station devices. If there is the intended second-type traffic data, the $X$ station devices can decode the data field of the second PPDU based on the parameters indicated in the preamble to obtain the second-type traffic data intended for them.

In some embodiments, the second PPDU includes a second preamble field and a data field, where the second preamble field is used to indicate decoding information for the data field, and the data field is used to carry the second-type traffic data.

The following describes the design of the preamble field in the second PPDU with specific examples.

In some embodiments, the second preamble field includes the entirety of the first preamble field of the first PPDU, that is, the preamble field included in the second PPDU is the same as the preamble field included in the first PPDU. In other words, the second preamble field includes complete decoding information.

In some embodiments, the second preamble field includes all of the following fields: L-STF field, L-LTF field, L-SIG field, RL-SIG field, U-SIG field, UHR-SIG field, UHR-STF field, and UHR-LTF field.

In some embodiments, the second preamble field includes a part of the first preamble field of the first PPDU.

That is, the second preamble field can include partial decoding information. In this case, the missing decoding information can be obtained from the preamble field of the first PPDU.

In some cases, when the second-type traffic data arrives at all *X* station devices, in this case, the second preamble field can include partial decoding information. For example, the access point device can transmit the second-type traffic data for each station device according to the RU allocation pattern of the first PPDU.

In some embodiments, the second preamble field includes some of the following fields: L-STF field, L-LTF field, L-SIG field, RL-SIG field, U-SIG field, UHR-SIG field, UHR-STF field, and UHR-LTF field.

As an example, the second preamble field may include the L-SIG field, RL-SIG field, U-SIG field, UHR-SIG field, UHR-STF field, and UHR-LTF field. For the missing L-STF and L-LTF fields, the L-STF and L-LTF fields from the first PPDU can be used to complete signal detection, automatic gain control, time synchronization, and coarse frequency offset estimation, as well as channel estimation and further frequency offset estimation.

In some embodiments, the second preamble field includes an indication field used to indicate whether the data field carries the second-type traffic data, or in other words, whether the second-type traffic data has arrived.

In some embodiments, the indication field is carried in the UHR-SIG field, for example, in a user field, a common field, or a user-specific field of the UHR-SIG field.

For example, bit B15 in the user field of the UHR-SIG field can be used as the indication field.

For another example, bit B13 in the common field of the UHR-SIG field can be used as the indication field.

For another example, bit B15 in the user-specific field of the UHR-SIG field can be used as the indication field.

In some embodiments, the indication field is carried in the U-SIG field, for example, using bit B20 in the U-SIG field as the indication field.

Optionally, the indication field can be one bit, where a value of 1 of the one bit indicates that the data field carries the second-type traffic data, and any other value indicates that the data field carries the first-type traffic data or not the second-type traffic data. Alternatively, a value of 0 of the one bit indicates that the data field carries the second-type traffic data, and any other value indicates that the data field carries the first-type traffic data or not the second-type traffic data.

In this manner 1, after transmitting the second PPDU, the transmitting device can also determine a size of the remaining resources, $T_{\text{remain}}$, and the number of segments, L, of the first-type traffic data that can be transmitted with the remaining resources.

The size of the remaining resources $T_{\text{remain}}$ can refer to the size of remaining resources after transmitting the first PPDU and the second PPDU on the first TXOP, such as the remaining number of time-domain symbols or the duration of the remaining time-domain symbols.

In some embodiments, when $T_{\text{remain}}$ is sufficient to transmit at least one segment ($L \geq 1$) of the first-type traffic data, the remaining resources are used to transmit a third PPDU, where the third PPDU is used to carry the remaining *L* segments of the first-type traffic data that have not been transmitted.

In some embodiments, the size of the remaining resources of the first TXOP is determined according to the duration of the first TXOP, the time occupied by transmitting the first PPDU, and the time occupied by transmitting the second PPDU.

For example, as illustrated in FIG. 6, the size of the remaining resources can be determined according to the formula $T_{\text{remain}} = T_{TXOP} - T_{PPDU1} - 3 \times SIFS - T_{PPDU2} - T_{ACK}$.

In the above, $T_{TXOP}$ represents the duration of the first TXOP, $T_{PPDU1}$ represents the duration of the first PPDU, $T_{PPDU2}$ represents the duration of the second PPDU, and $T_{ACK}$ represents the duration of the ACK.

In some embodiments, $T_{PPDU1} = T_{preamble} + N_{\text{seg},tx} \times N_{SYS}^{\text{seg}} \times T_{SYM}$ .

In the above, $T_{preamble}$ represents the duration of the preamble field in the first PPDU, $N_{seg,tx}$ represents the number of segments that have been transmitted in the first PPDU (or, the segment number of the segment where the first sequence is located (numbering starts from 1)), $N_{SYS}^{\text{seg}}$ represents the number of OFDM symbols occupied by one segment, and $T_{SYM}$ represents the duration of one OFDM symbol.

In some embodiments, the number of segments *L* of the first-type traffic data that the remaining resources can transmit is determined based on the size of the remaining resources $T_{\text{remain}}$ and the duration of a segment $N_{SYS}^{seg} \times T_{SYM}$ .

For example, $L = \text{floor}(\frac{Tremain - T_{PE} - SingnalExtension}{N_{SYS}^{seg} \times T_{SYM}})$ .

In the above, the meanings of $T_{PE}$ and *SignalExtension* can be referred to the relevant descriptions in the preceding embodiments, and are not repeated herein for the sake of brevity.

In some embodiments, if *L* is less than or equal to 0, it indicates that the remaining resources are not sufficient to transmit one segment of the first-type traffic data, and the remaining resources can be released.

In some embodiments, if *L* is greater than 0, it indicates that the remaining resources are sufficient to transmit *L* segment(s) of the first-type traffic data, and these $L$ segment(s) can be transmitted on the remaining resources.

As illustrated in FIG. 7, when $L$=1, the transmitting device sends the third PPDU after a SIFS interval following the transmission of the second PPDU, where the third PPDU includes one segment of the first-type traffic data. For example, if PPDU segment 2 of the first-type traffic data have been transmitted before the second PPDY, the second PPDU can carry PPDU segment 3 of the first-type traffic data.

In some embodiments, the third PPDU includes a third preamble field and a data field, where the third preamble segment is used to indicate decoding information for the data field, and the data field is used to carry the remaining $L$ segments of the first-type traffic data that have not been transmitted.

In some embodiments, the third preamble field of the third PPDU includes part of the first preamble field of the first PPDU.

That is, the third preamble field can include partial decoding information. In this case, the missing decoding information can be obtained from the preamble field of the first PPDU.

In some embodiments, the third preamble field includes some of the following fields: L-STF field, L-LTF field, L-SIG field, RL-SIG field, U-SIG field, UHR-SIG field, UHR-STF field, and UHR-LTF field.

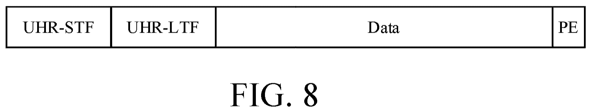

For example, as illustrated in FIG. 8, the third preamble field only includes the UHR-STF field and the UHR-LTF field. Then the receiving device can obtain the missing decoding information from the L-STF field, L-LTF field, L-SIG field, RL-SIG field, U-SIG field, and UHR-SIG field of the first PPDU. Specifically, the transmitting device encodes the data field of the third PPDU according to the parameters defined in the preamble field of the first PPDU, such as length information (LENGTH), Bandwidth, RU Allocation, LDPC Extra Symbol Segment, Pre-Forward Error Correction (Pre-FEC) Padding Factor, Packet Extension (PE) disambiguity, MCS, etc.

Correspondingly, the receiving device decodes the data field of the third PPDU according to the parameters defined in the preamble field of the first PPDU, such as LENGTH, Bandwidth, RU Allocation, LDPC Extra Symbol Segment, Pre-FEC Padding Factor, PE disambiguity, MCS, etc.

In some embodiments, the third preamble field of the third PPDU includes the entirety of the first preamble field of the first PPDU.

That is, the third preamble field can include all the decoding information.

In some embodiments, the third preamble field includes all of the following fields: L-STF field, L-LTF field, L-SIG field, RL-SIG field, U-SIG field, UHR-SIG field, UHR-STF field, and UHR-LTF field.

For example, in DL MU transmission, DL SU transmission, or UL SU transmission, the preamble field of the third PPDU can contain the L-STF field, L-LTF field, L-SIG field, RL-SIG field, U-SIG field, UHR-SIG field, UHR-STF field, and UHR-LTF field, as illustrated in FIG. 2. Under this PPDU format, the transmitting device can encode the data field of the third PPDU according to the parameters defined in the preamble field. Correspondingly, the receiving device can decode the data field of the third PPDU according to the parameters defined in the preamble field of the third PPDU.

The following describes a receiving process of the receiving device in manner 1 with specific examples.

As mentioned above, the receiving device can also know the number of segments $N_{seg}$ of the data to be transmitted.

Step 1: Within the first TXOP, the receiving device detects and decodes a preamble field of the PPDU to obtain parameters for decoding a data field, such as LENGTH, Bandwidth, RU Allocation, LDPC Extra Symbol Segment, Pre-FEC Padding Factor, PE Disambiguity, MCS, etc., and calculates the number of time-domain symbols $N_{SYM}$ required for data transmission.

Step 2: A PHY entity of the receiving device determines, based on $N_{SYM}$, whether data in the original PPDU was divided into multiple segments.

For example, if $N_{seg} \leq N_{SYS\ min}^{seg}$, it is determined that the data to be transmitted was not divided into multiple segments, and the receiving device decodes the current PPDU according to the existing process.

For another example, if $N_{seg} > N_{SYS\ min}^{seg}$, it is determined that the data to be transmitted was divided into multiple segments.

If the final segment of the received PPDU (i.e., the first PPDU) includes a first sequence, the receiving device can determine that the next transmission will be a PPDU carrying the second-type traffic data. The receiving device can then attempt to detect a preamble after the SIFS following the end of this PPDU. If a preamble is detected, it is determined that the data in the PPDU carrying this preamble includes the second-type traffic data, and the receiving device continues to receive this PPDU (i.e., the second PPDU).

Specifically, the receiving device can determine the number of time-domain symbols $N_{SYS}^{seg}$ occupied by one segment based on $N_{SYM}$ and $N_{seg}$. The specific calculation method can refer to the relevant implementation on the transmitting device side, which is not repeated herein.

Further, the PHY entity of the receiving device decodes the payload of each PSDU segment in the data field of the first PPDU and checks whether the final *K* time-domain symbols of each PSDU segment are the first sequence.

Scenario 1: If the final *K* time-domain symbols are the first sequence, it indicates that a PPDU carrying the second-type traffic data has preempted transmission resources of the current PPDU. The receiving device needs to wait for the SIFS time and then start detecting and decoding the PPDU carrying the second-type traffic data, i.e., the second PPDU. After the second PPDU is received, the PHY entity of the receiving device can attempt to detect whether there is a PPDU carrying the remaining segments that have not been transmitted, on the remaining resources. For example, after the SIFS interval following the reception of the second PPDU, the receiving device attempts to detect the PPDU carrying the remaining segments that have not been transmitted (i.e., the third PPDU).

Scenario 1-1: If the detected third PPDU includes a part of preamble segments, that is, includes partial decoding information, the receiving device can decode a data field of the third PPDU based on the preamble segments in the third PPDU combined with preamble segments in the first PPDU (the preamble segments not carried in the third PPDU).

For example, the third PPDU only includes a UHR-STF field and a UHR-LTF field. The receiving device can then decode the data field of the third PPDU based on the parameters defined in the preamble field of the first PPDU, such as LENGTH, Bandwidth, RU Allocation, LDPC Extra Symbol Segment, Pre-FEC Padding Factor, PE Disambiguity, MCS, etc.

Scenario 1-2: If the detected third PPDU includes all preamble segments, that is, includes all the decoding information, the receiving device can decode the data field of the third PPDU based on the preamble segments in the third PPDU.

Scenario 2: If the final *K* time-domain symbols are not the first sequence, it indicates that no PPDU carrying the second-type traffic data has preempted the transmission resources of the current PPDU. Therefore, the receiving device continues to receive and decode the next PSDU segment until the entire PPDU is received and decoded.

Manner 2: The second PPDU is used only for transmitting the first-type traffic data and the second-type traffic data.

In DL MU PPDU transmission, the transmitting device is an access point device, and the target receiving device of the first PPDU is *X* station devices. Among these *X* station devices, *Y* station devices have the second-type traffic data arriving. The access point device can transmit the second PPDU on the resource units allocated by the access point device to these *Y* station devices.

In some embodiments, *X=Y,* then the second PPDU is used to carry the second-type traffic data for the *Y* station devices.

In some other embodiments, *X* is greater than *Y,* and the *Y* station devices are a part of the *X* station devices. Then the second PPDU is used to carry the second-type traffic data for the *Y* station devices and the first-type traffic data for the remaining *X-Y* station devices.

In some other embodiments, the *X* station devices and the *Y* station devices partially overlap. For example, *P* station devices overlap between the *X* station devices and the *Y* station devices. Then the second PPDU is used to carry the second-type traffic data for the *Y* station devices and the first-type traffic data for the *X-P* station devices, where the *X-P* station devices are the station devices in the *X* station devices other than the overlapping *P* station devices, and *P* is a positive integer.

In some other embodiments, the *X* station devices and the *Y* station devices do not overlap at all. Then the second PPDU is used to carry the second-type traffic data for the *Y* station devices and the first-type traffic data for the *X* station devices.

In some embodiments, the access point device transmits the second-type traffic data for the *Y* station devices and the first-type traffic data for the remaining *X-Y* station devices according to an original RU allocation (for example, when the *Y* station devices are a subset of the *X* station devices), or according to a new RU allocation.

In some specific scenarios, if there are *X* STAs participating in OFDMA transmission, among which *Y* STAs (these *Y* STAs include a part of the *X* STAs) have the second-type traffic data, then the AP transmits the second PPDU according to the RU allocation pattern of the first PPDU, that is, the AP transmits the second-type traffic data on RU or MRUs corresponding to the *Y* STAs with the second-type traffic data, and transmits the remaining data of the first-type traffic data that have not been transmitted on RUs or MRUs corresponding to the (*X-Y*) STAs without the second-type traffic data.

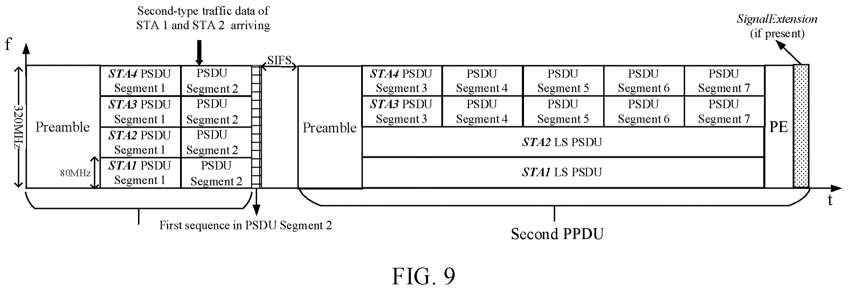

Taking FIG. 9 as an example, in a 320MHz OFDMA PPDU, in the order of increasing frequency, RUs of STA 1 to STA 4 are respectively on the 1st to 4th 80MHz sub-channels. When the second-type traffic data arrives at STA 1 and STA 2, the second PPDU will be transmitted after the SIFS time. The RUs of STA 1 and STA 2 are respectively on the 1st and 2nd 80MHz sub-channels, and the RUs of STA 3 and STA 4 are respectively on the 3rd and 4th 80MHz sub-channels. Therefore, the AP transmits the second-type traffic data for STA1 on the 1st 80MHz sub-channel, transmits the second-type traffic data for STA2 on the 2nd 80MHz sub-channel, transmits the remaining segment that have not been transmitted for STA3 on the 3rd 80MHz sub-channel, and transmits the remaining segment that have not been transmitted for STA4 on the 4th 80MHz sub-channel.

In some embodiments, the second PPDU includes a second preamble field and a data field, where the second preamble field is used to indicate decoding information of the data field, and the data field is used to carry the second-type traffic data, or to carry both the second-type traffic data and the first-type traffic data.

In some embodiments, the second preamble field includes a part of the first preamble field of the first PPDU.

That is, the second preamble field can include partial decoding information. In this case, the missing decoding information can be obtained from the preamble field of the first PPDU.

In some cases, when the access point device transmits the second PPDU according to the RU allocation pattern of the first PPDU, the second preamble field can include partial decoding information.

In some embodiments, the second preamble field includes some of the following fields: L-STF field, L-LTF field, L-SIG field, RL-SIG field, U-SIG field, UHR-SIG field, UHR-STF field, and UHR-LTF field.

As an example, the second preamble field can include the L-SIG field, RL-SIG field, U-SIG field, UHR-SIG field, UHR-STF field, and UHR-LTF field. For the missing L-STF and L-LTF fields, the L-STF and L-LTF fields from the first PPDU can be utilized to complete signal detection, automatic gain control, time synchronization, and coarse frequency offset estimation, as well as channel estimation and further frequency offset estimation.

In some embodiments, the second preamble field includes the entirety of the first preamble field of the first PPDU.

That is, the preamble field included in the second PPDU is the same as the preamble field included in the first PPDU. In other words, the second preamble field includes complete decoding information.

In some embodiments, the second preamble field includes all of the following fields: L-STF field, L-LTF field, L-SIG field, RL-SIG field, U-SIG field, UHR-SIG field, UHR-STF field, and UHR-LTF field.

In some embodiments, the second preamble field includes an indication field used to indicate whether the data field carries the second-type traffic data, or in other words, whether the second-type traffic data has arrived.

In some embodiments, the indication field is carried in the UHR-SIG field, for example, in the user field, common field, or user-specific field of the UHR-SIG field.

For example, bit B15 in the user field of the UHR-SIG field can be used as the indication field.

For another example, bit B13 in the common field of the UHR-SIG field can be used as the indication field.

For another example, bit B15 in the user-specific field of the UHR-SIG field can be used as the indication field.

In some embodiments, the indication field is carried in the U-SIG field, for example, bit B20 in the U-SIG field is used as the indication field.

Optionally, the indication field can be a single bit, where a value of 1 of this bit indicates that the data field carries the second-type traffic data, and any other value indicates that the data field carries the first-type traffic data or not the second-type traffic data. Alternatively, a value of 0 of this bit indicates that the data field carries the second-type traffic data, and any other value indicates that the data field carries the first-type traffic data or not the second-type traffic data.

Table 1 shows a format design of a user field.

Table 1

| Bit | Subfield | Number of bits | Description |
|---|---|---|---|
| B0-B10 | STA-ID | 11 | Set to a value of the TXVECTOR parameter STA-ID |
| B11-B14 | MCS | 4 | Set to $n$ for EHT-MCS $n$, where $n$ = 0, 1, ..., 15. |
| B15 | traffic data type ID | 1 | 1 indicates there is second-type traffic data; 0 indicates there is no second-type traffic data |
| B16-B19 | NSS | 4 | The number of spatial streams minus 1. |
| B20 | Beamformed | 1 | Set to 1 if a beamforming steering matrix is applied to the waveform in a non-MU-MIMO allocation. Set to 0 otherwise. |
| B21 | Coding | 1 | Set to 0 for BCC. Set to 1 for LDPC. |

Optionally, the indication field can be a single bit, where a value of 1 of this bit indicates the presence of the second-type traffic data, and any other value indicates the absence of the second-type traffic data. For example, in the example illustrated in FIG. 9, B15 in the User field for each of STA 1 and STA 2 has a value of 1; while B 15 in the User field for each of STA 3 and STA 4 has a value of 0.

In some embodiments of the present disclosure, when the second PPDU is used to carry both the first-type traffic data and the second-type traffic data, the transmitting device can align a PSDU carrying the first-type traffic data and a PSDU carrying the second-type traffic data in the second PPDU.

For example, the transmitting device can determine the remaining number of time-domain symbols, $N_{SYM,remain}$, based on the number of time-domain symbols required to transmit the first-type traffic data, $N_{SYS}$, and the number of time-domain symbols occupied by the transmission of the first PPDU.

Then, based on the remaining number of time-domain symbols, $N_{SYM,remain}$, and the number of time-domain symbols required to transmit the second-type traffic data, $N_{SYS,LS}$, the transmitting device can pad the PSDU carrying the first-type traffic data or the PSDU carrying the second-type traffic data to obtain the second PPDU.

The following describes the method for aligning the PSDU carrying the first-type traffic data and the PSDU carrying the second-type traffic data in detail.

Step 1: The PHY entity of the transmitting device can obtain a third primitive from the MAC entity, such as the PLME-TXTIME.request primitive, where the third primitive can include a parameter(s) for transmitting the second PPDU, such as the number of spatial streams, MCS, nominal packet padding, APEP_LENGTH, etc.

Step 2: The PHY entity of the transmitting device calculates the number of time-domain symbols required for the second-type traffic data, $N_{SYS,LS}$, the number of Pre-FEC padding bits required by each receiving device, $N_{Pre-FEC,u}$, and the packet extension time, $T_{PE}$, according to the APEP_LENGTHu of each receiving device.

Step 3: The transmitting device calculates the number of time-domain symbols occupied by the remaining segments of the first-type traffic data that have not been transmitted, that is, $N_{SYM,remain}$.

For example, $N_{SYM,remain} = N_{SYM} - N_{seg,tx} \times N_{SYS}^{seg}$.

In the above, $N_{SYM}$ represents the total number of time-domain symbols required to transmit the first-type traffic data, $N_{seg,tx}$ represents the number of segments that have been transmitted in the first PPDU, and $N_{SYS}^{seg}$ represents the number of time-domain symbols occupied by one segment.

Step 4: According to $N_{SYS,LS}$ and $N_{SYM,remain}$, the transmitting device determines the number of padding symbols, $m_{PAD,SYM}$.

For example, $m_{PAD,SYM} = abs(N_{SYS,LS} - N_{SYM,remain})$.

In some cases, if $N_{SYS,LS}$ is greater than or equal to $N_{SYM,remain}$, then $m_{PAD,SYM}$ time-domain symbols are padded after the PSDU carrying the first-type traffic data in the second PPDU.

In some other cases, if $N_{SYS,LS}$ is less than $N_{SYM,remain}$, the PSDU carrying the second-type traffic data in the second PPDU is padded. For example, the PSDU carrying the second-type traffic data is padded according to the number of padding symbols, $m_{PAD,SYM}$.

The following describes the padding method for the PSDU carrying the second-type traffic data with specific examples.

Step 4-1: The PHY entity of the transmitting device reports the PSDU_LENGTHu of the receiving device u to the MAC entity.

For example,

$$PSDU\_LENGTH_u = floor\left(\frac{N_{PAD,Pre-FEC,u} + m_{PAD,PAD}\, N_{DBPS,u} + APEP\_LENGTHu}{8}\right).$$

In the above, $N_{PAD,Pre-FEC,u}$ represents the number of Pre-FEC pad bits of the receiving device u, *APEP_LENGTHu* represents the APEP length of the receiving device u, and $N_{DBPS,u}$ represents the number of data bits in the OFDM symbol for the receiving device u.

Step 4-2: The MAC entity of the transmitting device reports a PSDU with MAC padding to meet the length value of the PSDU, and then the PHY entity determines the number of PHY pad bits to be added and attaches the pad bits to the PSDU. The PHY entity adds 0 to 7 pre-FEC pad bits.

The number of bits padded by the MAC entity, $N_{PAD,Pre-FEC,\, MAC,u}$, is:

$$N_{PAD,Pre-FEC,MAC,u} = 8 \times floor\left(\frac{N_{PAD,Pre-FEC,u} + m_{PAD,PAD}\, N_{DBPS,u}}{8}\right)$$

The number of bits padded by the MAC entity is:

$$N_{PAD,Pre-FEC,PHY,u} = (N_{PAD,Pre-FEC,u} + m_{PAD,PAD}\, N_{DBPS,u})\, mod\, 8.$$

Step 5: The MAC entity of the transmitting device prepares a PPDU for transmitting both the first-type traffic data and the second-type traffic data, that is, the second PPDU.

The following describes the receiving process at the receiving device in manner 2.

Scenario 1: If the second PPDU includes all preamble fields, that is, includes all decoding information, then all receiving devices can each determine whether the second-type traffic data has arrived at its own by decoding the indication field in the User field of the U-SIG field. For receiving devices with the second-type traffic data arriving, the receiving devices can decode the data field of the second PPDU according to parameters defined in a preamble field of the second PPDU. For receiving devices without the second-type traffic data arriving, the receiving devices can calculate the remaining number of time-domain symbols, $N_{SYM,remain}$, as described in the preceding embodiments, and decode the segments of the first-type traffic data in the second PPDU according to parameters defined in a preamble field of the first PPDU and $N_{SYM,remain}$. If the number of time-domain symbols occupied by the received second PPDU is greater than $N_{SYM,remain}$, then the symbols exceeding $N_{SYM,remain}$ are considered as padding symbols and not carrying data.

Scenario 2: If the second PPDU includes only a part of the preamble fields, that is, partial decoding information, then the missing decoding information can be obtained from the preamble field of the first PPDU. That is, the receiving device can decode the data field of the second PPDU based on the preamble fields included in the second PPDU and preamble fields in the first PPDU (the preamble segments not included in the second PPDU).

In some cases, if the second-type traffic data arrives before the transmission of the first-type traffic data begins, the transmitting device can first transmit the second-type traffic data, and then transmit the first-type traffic data after the second-type traffic data has been transmitted. That is, the second PPDU is transmitted before the first PPDU. In some cases, if the remaining resources are not sufficient to transmit one segment of the first-type traffic data after transmitting the second PPDU, the transmitting device may not transmit the first PPDU on the first TXOP.

In summary, the embodiments of the present disclosure provide a resource preemption mechanism, where the transmitting device can preempt the resources for transmitting the first-type traffic data to transmit the second-type traffic data. For example, the transmitting device can preempt the resources for transmitting a non-latency-sensitive traffic to transmit a latency-sensitive traffic, thereby ensuring timely transmission of the latency-sensitive traffic and meeting the latency requirements of the latency-sensitive traffic.

Moreover, by determining the number of bits of the tail field of the BCC encoder of the receiving device based on the number of segments of the first-type traffic data, and further preparing the PPDU according to this number of bits, it can be ensured that the OFDM symbols in the segments of the first-type traffic data that have already been transmitted can be completely received and decoded, even if the transmission of the first-type traffic data is interrupted by the transmission of the second-type traffic data. This ensures the integrity of the first-type traffic data.

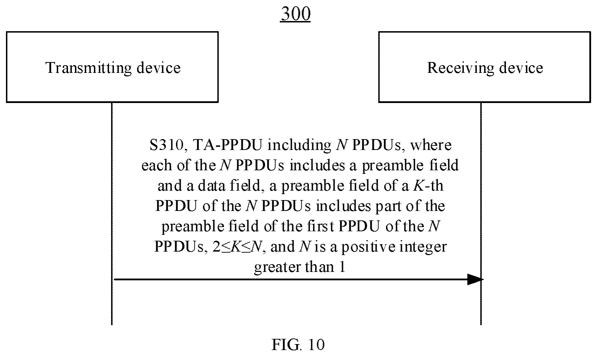

FIG. 10 is a schematic flowchart of a method of wireless communication 300 according to another embodiment of the present disclosure. As illustrated in FIG. 10, the method 300 includes the following.

S310, a transmitting device sends a time aggregate (TA) physical layer protocol data unit (TA-PPDU) on a first transmission opportunity (TXOP). The TA-PPDU includes N PPDUs, where each of the N PPDUs includes a preamble field and a data field. The preamble field of the K-th PPDU of the N PPDUs includes part of the preamble field of the first PPDU of the N PPDUs, where $2 \leq K \leq N$, and N is a positive integer greater than 1.

In some embodiments, the N PPDUs in the TA-PPDU are transmitted in a time-division manner.

In some embodiments, the preamble field of the first PPDU in the TA-PPDU is also known as a long preamble field, and the preamble fields of subsequent PPDUs are also known as short preamble fields. That is, the first PPDU includes all the decoding information, while the subsequent PPDUs only include partial decoding information.

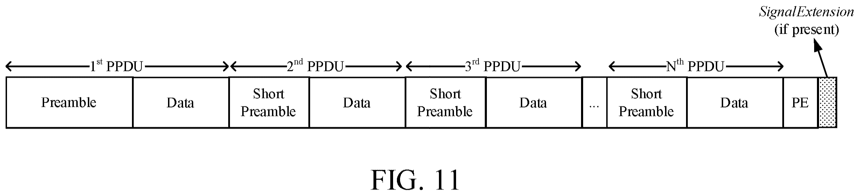

In some embodiments, the TA-PPDU can also include a PE field after the N PPDUs. Optionally, a signal extension field is included after the PE field. FIG. 11 illustrates a format of a TA-PPDU, where each PPDU includes a preamble field and a data field. The preamble field of the first PPDU is a long preamble field, and the preamble fields of the subsequent PPDUs are short preamble fields.

In some embodiments, the number of UHR-LTF symbols in the preamble field of the first PPDU must be greater than or equal to the maximum number of UHR-LTF symbols required by each PPDU that makes up the TA-PPDU.

In some embodiments, the preamble field of the first PPDU of the N PPDUs includes the following fields: L-STF field, L-LTF field, L-SIG field, RL-SIG field, U-SIG field, UHR-SIG field, UHR-STF field, and UHR-LTF field.

In some embodiments, the preamble field of the K-th PPDU of the N PPDUs includes some of the following fields: L-STF field, L-LTF field, L-SIG field, RL-SIG field, U-SIG field, UHR-SIG field, UHR-STF field, and UHR-LTF field.

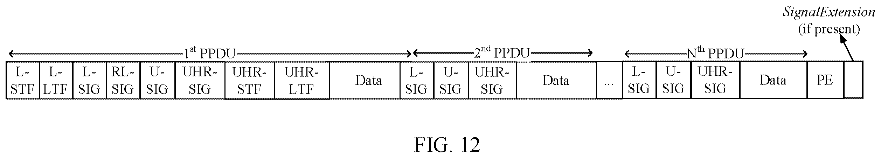

For example, as illustrated in FIG. 12, in a TA-PPDU, the preamble field of the first PPDU includes the L-STF field, L-LTF field, L-SIG field, RL-SIG field, U-SIG field, UHR-SIG field, UHR-STF field, and UHR-LTF field. The preamble field of each subsequent PPDU only includes the L-SIG field, U-SIG field, and UHR-SIG field, where the L-SIG field is used to carry rate and length information of the PPDU, and the U-SIG field and UHR-SIG field are used to carry decoding information for decoding the subsequent data field.

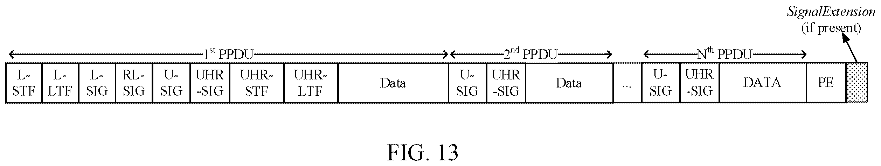

For another example, as illustrated in FIG. 13, in a TA-PPDU, the preamble field of the first PPDU includes the L-STF field, L-LTF field, L-SIG field, RL-SIG field, U-SIG field, UHR-SIG field, UHR-STF field, and UHR-LTF field. The preamble field of each subsequent PPDU only includes the U-SIG field and UHR-SIG field, where the U-SIG field and UHR-SIG field are used to carry decoding information for decoding the subsequent data field. The length of each subsequent PPDU can be determined according to the L-SIG field of the first PPDU, that is, the length of a PSDU carried by the first PPDU is the same the length of a PSDU carried by each subsequent PPDU.

In some embodiments, the preamble fields of the N PPDUs each include an indication field used to indicate whether the data field of the PPDU is used to carry the second-type traffic data, or to transmit the first-type traffic data or the second-type traffic data, or in other words, to indicate the type of traffic data being transmitted.

In some embodiments, the indication field is carried in the UHR-SIG field, for example, in a user field, a common field, or a user-specific field of the UHR-SIG field.

For example, bit B15 in the user field of the UHR-SIG field is used as the indication field.

For another example, bit B13 in the common field of the UHR-SIG field is used as the indication field.

For another example, bit B15 in the user-specific field of the UHR-SIG field is used as the indication field.

In some embodiments, the indication field is carried in the U-SIG field. For example, bit B20 in the U-SIG field is used as the indication field.

Optionally, the indication field can be a single bit, where a value of 1 of this bit indicates that the data field carries the second-type traffic data, and any other value indicates that the data field carries the first-type traffic data or not the second-type traffic data. Alternatively, a value of 0 of this bit indicates that the data field carries the second-type traffic data, and any other value indicates that the data field carries the first-type traffic data or not the second-type traffic data.

In some embodiments, the transmitting device transmits the first-type traffic data to the receiving device through the TA-PPDU. When transmitting the first PPDU in the TA-PPDU, if the second-type traffic data arrives and the first PPDU is not the final PPDU of the $N$ PPDUs, then the transmitting device can start transmitting the second-type traffic data at the next PPDU after completing the transmission of the first PPDU.

In some embodiments, the latency requirement of the second-type traffic data is higher than that of the first-type traffic data.

For example, the second-type traffic data is latency-sensitive traffic data, or, in other words, low-latency traffic data, while the first-type traffic data is non-latency-sensitive traffic.

In some other embodiments, the priority of the second-type traffic data is higher than that of the first-type traffic data.

For example, the first-type traffic data is low-priority traffic data, while the second-type traffic data is high-priority traffic data.

The following specifically describes a transmission process of the TA-PPDU.

Within a TXOP, a PHY entity of a transmitting device can prepare the $N$ PPDUs that make up the TA-PPDU and then transmit these $N$ PPDUs in time-domain order.

When second-type traffic data arrives randomly, if the $N$-th PPDU, that is, the final PPDU, of the TA-PPDU is currently being transmitted, then the transmitting device needs to wait until the entire TA-PPDU transmission is completed before transmitting the second-type traffic data. If the $n$-th ($n \neq N$) PPDU, that is, a non-final PPDU, of the TA-PPDU is currently being transmitted, then the PHY entity of the transmitting device can start transmitting the second-type traffic data on the subsequent PPDU after the current non-final PPDU is transmitted, for example, transmitting the second-type traffic data on the ($n+m$)-th PPDU ($m$=1, 2, ..., $N$-$n$), and indicate in a preamble field of the PPDU carrying the second-type traffic data that this PPDU carries the second-type traffic data.

In a scenario, the short preamble field of the PPDU carrying the second-type traffic data includes the L-SIG field, the U-SIG field, and the UHR-SIG field. The indication field in the short preamble can then indicate that this PPDU carries the second-type traffic data. For example, whether the PPDU carries the second-type traffic data can be indicated through bit B20 of the U-SIG field, or bit B13 of the Common field in the UHR-SIG field, or bit B15 of the User Special field in the UHR-SIG field.

In another scenario, the short preamble field of the PPDU carrying the second-type traffic data includes the U-SIG field and the UHR-SIG field. The transmitting device needs to prepare the PPDU for transmitting the second-type traffic data according to the length information carried in the L-SIG field of the preamble field of the first PPDU contained in the TA-PPDU. Moreover, the indication field in the short preamble field indicates this PPDU is carrying the second-type traffic data. For example, whether the PPDU carries the second-type traffic data can be indicated through bit B20 of the U-SIG field, or bit B13 of the Common field in the UHR-SIG field, or bit B15 of the User Special field in the UHR-SIG field.

The following specifically describes a reception process of the TA-PPDU.

When receiving the TA-PPDU, a PHY entity of a receiving device receives and decodes the first PPDU contained in the TA-PPDU according to the existing process. After the reception of this PPDU ends, the receiving device attempts to detect a short preamble field of the next PPDU and decodes this PPDU, until the entire TA-PPDU is received.

In an embodiment, if the short preamble field of the received PPDU includes the L-SIG field, U-SIG field, and UHR-SIG field, the length information of this PPDU can be obtained by decoding the L-SIG field, and the decoding information for the subsequent Data field can be obtained by decoding the U-SIG and UHR-SIG fields. Also, whether this PPDU carries the second-type traffic data can be determined through the indication field in the short preamble field. For example, whether the PPDU carries the second-type traffic data can be determined through bit B20 of the U-SIG field, or bit B13 of the Common field in the UHR-SIG field, or bit B15 of the User Special field in the UHR-SIG field.

In another embodiment, if the received short preamble includes the U-SIG and UHR-SIG fields, the length information of this PPDU is determined according to the L-SIG field of the first PPDU, and the decoding information for the subsequent Data field is obtained by decoding the U-SIG and UHR-SIG fields. It can also be determined through the indication field in the short preamble whether this PPDU carries the second-type traffic data. For example, whether the PPDU carries the second-type traffic data can be determined through bit B20 of the U-SIG field, or bit B13 of the Common field in the UHR-SIG field, or bit B15 of the User Special field in the UHR-SIG field.

In summary, the transmitting device provides a TA PPDU that can be used for latency-sensitive traffic transmission. When latency-sensitive traffic data arrives randomly, the transmitting device can transmit the latency-sensitive traffic data on the subsequent PPDU after the non-final PPDU ends and indicate in the preamble field of this PPDU that the latency-sensitive traffic data is transmitted in this PPDU, thereby enabling the timely transmission of the latency-sensitive traffic and meeting the latency requirements of the latency-sensitive traffic.

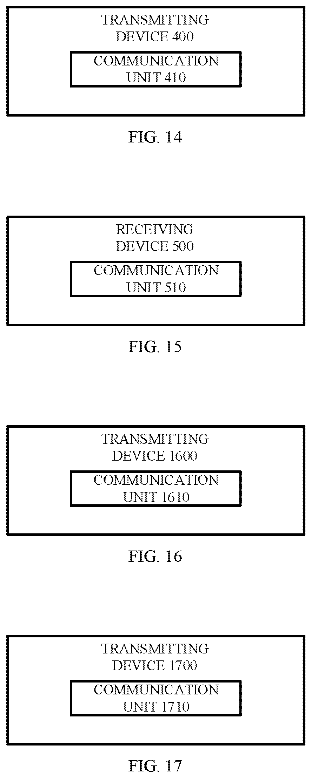

The above describes the method embodiments of the present disclosure in detail in combination with FIG. 4 to FIG. 13. In the following, apparatus embodiments of the present disclosure will be described in detail in combination with FIG. 14 to FIG. 20. It should be understood that the apparatus embodiments correspond to the method embodiments, and similar descriptions can refer to the method embodiments.

FIG. 14 illustrates a schematic block diagram of a transmitting device 400 according to an embodiment of the present disclosure. As illustrated in FIG. 14, the transmitting device 400 includes a communication unit 410 configured to transmit a first PPDU and a second PPDU on a first TXOP, where the first PPDU is used for transmitting first-type traffic data, the second PPDU is used for transmitting second-type traffic data, and a latency requirement of the second-type traffic data is higher than a latency requirement of the first-class traffic data.

In some embodiments, the transmitting device is an access point device, a target receiving device of the first PPDU includes one station device, and a target receiving device of the second PPDU includes one station device.

Alternatively, the transmitting device is an access point device, the target receiving device of the first PPDU includes $X$ station devices, and the target receiving device of the second PPDU includes $Y$ station devices, where $X$ and $Y$ are positive integers, and $X \geq Y$.

Alternatively, the transmitting device is a station device, the target receiving device of the first PPDU includes one access point device, and the target receiving device of the second PPDU includes one access point device.

In some embodiments, the first-type traffic data is predetermined to be transmitted through $N_{seg}$ segments, where $N_{seg}$ is a positive integer greater than 1.

In some embodiments, when a number of time-domain symbols $N_{SYS}^{seg}$ used to transmit one segment is greater than a first symbol-number threshold $N_{SYS\ min}^{seg}$, the first-type traffic data is transmitted through $N_{seg}$ segments.

In some embodiments, the transmitting device also includes a processing unit configured to: determine a number of bits $N_{tail,u}$ in a tail field of an encoder of a target receiving device of the first-type traffic data according to the number of segments $N_{seg}$ used to transmit the first-type traffic data; determine a number of time-domain symbols $N_{SYS}$ required to transmit the first-type traffic data according to the number of bits $N_{tail,u}$; and determine a number of time-domain symbols $N_{SYS}^{seg}$ used to transmit one segment according to $N_{SYS}$ and $N_{seg}$.

In some embodiments, the number of bits $N_{tail,u}$ is equal to $N_{seg} * N_{tail,u,init}$, where $N_{tail,u,init}$ represents a number of bits in the tail field of the encoder of the target receiving device of the first-type traffic data when the first-type traffic data is not segmented.

In some embodiments, the processing unit is further configured to round a result of dividing $N_{SYS}$ by $N_{seg}$ to obtain the number of time-domain symbols $N_{SYS}^{seg}$ used to transmit one segment.

In some embodiments, the first PPDU includes $N_{seg,tx}$ segments out of the $N_{seg}$ segments, where the $N_{seg,tx}$ segments are transmitted before the second PPDU, and $N_{seg,tx}$ is a positive integer.

In some embodiments, the second PPDU is transmitted after the first segment of the $N_{seg}$ segments, where an arriving time of the second-type traffic data is within a transmitting duration of the first segment, and the first segment is not the final segment in the $N_{seg}$ segments.

In some embodiments, the first segment includes a first sequence used to indicate that the second-type traffic data will be transmitted after the first sequence.

In some embodiments, the frequency domain position occupied by the first sequence are the same as the frequency domain position and size occupied by the first-type traffic data; and/or, the first sequence occupies $K$ time-domain symbols, where $K$ is a positive integer.

In some embodiments, a duration of time-domain symbols and a duration of a guard interval (GI) occupied by the first sequence are the same as a duration of time-domain symbols and a duration of a GI occupied by the first-type traffic data.

In some embodiments, the first PPDU includes a first preamble field and a data field, where the first preamble field is used to indicate the decoding information of the data field, and the data field is used to carry at least one segment of the first-type traffic data.

In some embodiments, the second PPDU includes a second preamble field and a data field, where the second preamble field is used to indicate the decoding information of the data field, and the data field is used to carry data.

In some embodiments, the second preamble field include a user field, where the user field includes an indication field for indicating whether the data field is used for carrying the second-type traffic data.

In some embodiments, the user field is carried in a UHR-SIG field.

In some embodiments, the second preamble field includes a part of the first preamble field of the first PPDU.

In some embodiments, the second preamble field includes a part of following fields: a non-high throughput short training (L-STF) field, a non-high throughput long training (L-LTF) field, a non-high throughput signal (L-SIG) field, a repeated non-high throughput signal (RL-SIG) field, a universal signal (U-SIG) field, an ultra-high reliability signal (UHR-SIG) field, an ultra-high reliability short training field (UHR-STF), and an ultra-reliable long training field (UHR-LTF).

In some embodiments, the second preamble field includes an entirety of a first preamble field of the first PPDU.

In some embodiments, the second preamble field includes all of following fields: the L-STF field, the L-LTF field, the L-SIG field, the RL-SIG field, the U-SIG field, the UHR-SIG field, the UHR-STF field, and the UHR-LTF field.

In some embodiments, the transmitting device is an access point device, the target receiving device of the first PPDU includes multiple station devices, and the second PPDU is transmitted on all resource units allocated by the access point device to the multiple station devices.

In some embodiments, the second preamble field of the second PPDU includes the entirety of the first preamble field of the first PPDU.

In some embodiments, the communication unit 410 is further configured to: after transmitting the first PPDU and the second PPDU, transmit a third PPDU on a remaining resource of the first TXOP if the remaining resource of the first TXOP is sufficient to transmit at least one segment of the first-type traffic data that has not been transmitted, where the third PPDU is used for transmitting the at least one segment that has not been transmitted.

In some embodiments, a size of the remaining resource of the first TXOP is determined according to a duration of the first TXOP, a duration occupied by transmitting the first PPDU, and a duration occupied by transmitting the second PPDU.

In some embodiments, the third PPDU includes a third preamble field and a data field, where the third preamble segment is for indicating the decoding information of the data field, and the data field is for carrying at least one segment of the first-type traffic data that has not been transmitted.

In some embodiments, the third preamble field of the third PPDU includes a part of the first preamble field of the first PPDU; or the third preamble field of the third PPDU includes a part of the first preamble field of the first PPDU.

In some embodiments, the transmitting device is an access point device, the target receiving device of the first PPDU includes multiple station devices, the target receiving device of the second PPDU includes at least one station device among the multiple station devices, and the second PPDU is transmitted on the resources allocated by the access point device to the at least one station device.

In some embodiments, the second preamble field of the second PPDU includes a part of the first preamble field of the first PPDU; or the second preamble field of the second PPDU includes a part of the first preamble field of the first PPDU.

In some embodiments, the transmitting device further includes a processing unit configured to: determine a number of remaining time-domain symbols $N_{SYM,remain}$ according to a number of time-domain symbols $N_{SYS}$ required to transmit the first-type traffic data and a number of time-domain symbols occupied by transmitting the first PPDU; and pad a PSDU carrying the first-type traffic data or a PSDU carrying the second-type traffic data according to the remaining number of time-domain symbols $N_{SYM,remain}$ and a number of time-domain symbols $N_{SYS,LS}$ required to transmit the second-type traffic data, to obtain the second PPDU.

In some embodiments, the processing unit is further configured to: if $N_{SYS,LS}$ is greater than or equal to $N_{SYM,remain}$, pad $P$ time-domain symbols after the PSDU carrying the first-type traffic data, where $P$ is a difference between $N_{SYS,LS}$ and $N_{SYM,remain}$; or if $N_{SYS,LS}$ is less than $N_{SYM,remain}$, pad the PSDU carrying the second-type traffic data.

In some embodiments, the processing unit is further configured to: determine a number of padding symbols according to the difference between $N_{SYM,remain}$ and $N_{SYS,LS}$; and pad the PSDU carrying the second-type traffic data according to the number of padding symbols.

Optionally, in some embodiments, the above communication unit can be a communication interface or a transceiver, or a communication chip or an input/output interface of a system on chip. The processing unit can be one or more processors.

It should be understood that the terminal device 400 according to the embodiments of the present disclosure may correspond to the transmitting device in the method embodiments of the present disclosure, and the operations and/or functions of the respective units of the transmitting device 400 are respectively for realizing the corresponding processes of the transmitting device in the method 200 illustrated in FIG. 4 to FIG. 9. For the sake of brevity, it will not be repeated here.

FIG. 15 is a schematic block diagram of a receiving device according to an embodiment of the present disclosure. The receiving device 500 in FIG. 15 includes a communication unit 510 configured to receive a first PPDU and a second PPDU transmitted by the transmitting device, where the first PPDU is used for transmitting first-type traffic data, and the second PPDU is used for transmitting second-type traffic data, and a latency requirement of the second-type traffic data is higher than a latency requirement of the first-type traffic data.

In some embodiments, the transmitting device is an access point device, a target receiving device of the first PPDU includes one station device, and a target receiving device of the second PPDU includes one station device.

Alternatively, the transmitting device is an access point device, the target receiving device of the first PPDU includes $X$ station devices, and the target receiving device of the second PPDU includes $Y$ station devices, where $X$ and $Y$ are positive integers, and $X \geq Y$.

Alternatively, the transmitting device is a station device, the target receiving device of the first PPDU includes one access point device, and the target receiving device of the second PPDU includes one access point device.

In some embodiments, the first-type traffic data is predetermined to be transmitted through $N_{seg}$ segments, where $N_{seg}$ is a positive integer greater than 1.

In some embodiments, when a number of time-domain symbols $N_{SYS}^{seg}$ used to transmit one segment is greater than a first symbol-number threshold $N_{SYS\,min}^{seg}$, the first-type traffic data is transmitted through $N_{seg}$ segments.

In some embodiments, the receiving device 500 further includes a processing unit configured to: determine a number of bits $N_{tail,u}$ in a tail field of an encoder of a target receiving device of the first-type traffic data according to the number of segments $N_{seg}$ used to transmit the first-type traffic data; determine a number of time-domain symbols $N_{SYS}$ required to transmit the first-type traffic data according to the number of bits $N_{tail,u}$; and determine a number of time-domain symbols $N_{SYS}^{seg}$ used to transmit one segment according to $N_{SYS}$ and $N_{seg}$.

In some embodiments, the number of bits $N_{tail,u}$ is equal to $N_{seg} * N_{tail,u,init}$, where $N_{tail,u,init}$ represents a number of bits in the tail field of the encoder of the target receiving device of the first-type traffic data when the first-type traffic data is not segmented.

In some embodiments, the processing unit is further configured to round a result of dividing $N_{SYS}$ by $N_{seg}$ to obtain the number of time-domain symbols $N_{SYS}^{seg}$ used to transmit one segment.

In some embodiments, the first PPDU includes $N_{seg,tx}$ segments out of the $N_{seg}$ segments, where the $N_{seg,tx}$ segments are transmitted before the second PPDU, and $N_{seg,tx}$ is a positive integer.

In some embodiments, the first segment of the first PPDU includes a first sequence, which is used to indicate that the second-type traffic data will be transmitted after the first sequence.

In some embodiments, the second PPDU is transmitted after the first segment of the $N_{seg}$ segments, where an arriving time of the second-type traffic data is within a transmitting duration of the first segment, and the first segment is not the final segment in the $N_{seg}$ segments.

In some embodiments, the frequency domain position occupied by the first sequence are the same as the frequency domain position and size occupied by the first-type traffic data; and/or, the first sequence occupies $K$ time-domain symbols, where $K$ is a positive integer.

In some embodiments, a duration of time-domain symbols and a duration of a guard interval (GI) occupied by the first sequence are the same as a duration of time-domain symbols and a duration of a GI occupied by the first-type traffic data.

In some embodiments, the first PPDU includes a first preamble field and a data field, where the first preamble field is used to indicate the decoding information of the data field, and the data field is used to carry at least one segment of the first-type traffic data.

In some embodiments, the second PPDU includes a second preamble field and a data field, where the second preamble field is used to indicate the decoding information of the data field, and the data field is used to carry data.

In some embodiments, the second preamble field includes a user field, which includes an indication field used to indicate whether the data field is used to carry the second-type traffic data.

In some embodiments, the user field is carried in a UHR-SIG field.

In some embodiments, the second preamble field includes a part of the first preamble field of the first PPDU.

In some embodiments, the second preamble field includes a part of following fields: a non-high throughput short training (L-STF) field, a non-high throughput long training (L-LTF) field, a non-high throughput signal (L-SIG) field, a repeated non-high throughput signal (RL-SIG) field, a universal signal (U-SIG) field, an ultra-high reliability signal (UHR-SIG) field, an ultra-high reliability short training field (UHR-STF), and an ultra-reliable long training (UHR-LTF) field.

In some embodiments, the second preamble field includes an entirety of the first preamble field of the first PPDU.

In some embodiments, the second preamble field includes all of following fields: the L-STF field, the L-LTF field, the L-SIG field, the RL-SIG field, the U-SIG field, the UHR-SIG field, the UHR-STF field, and the UHR-LTF field.

In some embodiments, the transmitting device is an access point device, the target receiving device of the first PPDU includes multiple station devices, and the second PPDU is transmitted on all resource units allocated by the access point device to the multiple station devices.

In some embodiments, the communication unit 510 is further configured to: after transmitting the first PPDU and the second PPDU, receive a third PPDU on a remaining resource of the first TXOP if the remaining resource of the first TXOP is sufficient to transmit at least one segment of the first-type traffic data that has not been transmitted, where the third PPDU is used for transmitting the at least one segment that has not been transmitted.

In some embodiments, a size of the remaining resource of the first TXOP is determined according to a duration of the first TXOP, a duration occupied by transmitting the first PPDU, and a duration occupied by transmitting the second PPDU.

In some embodiments, the third PPDU includes a third preamble field and a data field, where the third preamble segment is for indicating the decoding information of the data field, and the data field is for carrying at least one segment of the first-type traffic data that has not been transmitted.

In some embodiments, the third preamble field of the third PPDU includes a part of the first preamble field of the first PPDU; or the third preamble field of the third PPDU includes a part of the first preamble field of the first PPDU.

In some embodiments, the transmitting device is an access point device, the target receiving device of the first PPDU includes multiple station devices, the target receiving device of the second PPDU includes at least one station device among the multiple station devices, and the second PPDU is transmitted on the resources allocated by the access point device to the at least one station device.

In some embodiments, the second preamble field of the second PPDU includes a part of the first preamble field of the first PPDU; or the second preamble field of the second PPDU includes a part of the first preamble field of the first PPDU.

Optionally, in some embodiments, the above communication unit can be a communication interface or a transceiver, or a communication chip or an input/output interface of a system on chip. The processing unit can be one or more processors.

It should be understood that the receiving device 500 according to the embodiments of the present disclosure may correspond to the receiving device in the method embodiments of the present disclosure, and the operations and/or functions of the respective units of the receiving device 500 are respectively for realizing the corresponding processes of the receiving device in the method 300 illustrated in FIG. 4 to FIG. 9. For the sake of brevity, it will not be repeated here.

FIG. 16 is a schematic block diagram of a transmitting device 1600 according to an embodiment of the present disclosure. As illustrated in FIG. 16, the transmitting device 1600 includes a communication unit 1600 configured to transmit a TA-PPDU on a first TXOP, the TA-PPDU including N PPDUs, where each PPDU of the N PPDUs includes a preamble field and a data field, and the preamble field of the K-th PPDU of the N PPDUs includes some fields in the preamble field of the first PPDU of the N PPDUs, where $2 \leq K \leq N$, and $N$ is a positive integer greater than 1.

In some embodiments, the preamble field of the first PPDU of the $N$ PPDUs includes the following fields: a non-high throughput short training field (L-STF), a non-high throughput long training field (L-LTF), a non-high throughput signal field (L-SIG), a repeated non-high throughput signal field (RL-SIG), a universal signal field (U-SIG), an ultra-high reliability signal field (UHR-SIG), a UHR short training field (UHR-STF), and a UHR long training field (UHR-LTF).

In some embodiments, the preamble field of the $K$-th PPDU of the $N$ PPDUs includes some of the following fields: an L-STF field, an L-LTF field, an L-SIG field, an RL-SIG field, a U-SIG field, a UHR-SIG field, a UHR-STF field, and a UHR-LTF field.

In some embodiments, the transmitting device acquires the first TXOP for transmitting first-type traffic data, and $L$ PPDUs of the $N$ PPDU are used for transmitting second-type traffic data, a latency requirement of the second-type traffic data being higher than a latency requirement of the first-type traffic data, $L$ being a positive integer.

In some embodiments, the $L$ PPDUs are transmitted before the first PPDU, an arriving time of the second-type traffic data is within a transmission duation of the first PPDU, and the first PPDU is not the final PPDU of the $N$ PPDUs.

In some embodiments, the preamble field of the $N$ PPDUs includes an indication field for indicating that a data field of the PPDU carries first-type traffic data or second-type traffic data, a latency requirement of the second-type traffic data being higher than a latency requirement of the first-type traffic data.

In some embodiments, the indication field is carried in the UHR-SIG field.

Optionally, in some embodiments, the above communication unit can be a communication interface or a transceiver, or a communication chip or an input/output interface of a system on chip. It should be understood that the terminal device 1600 according to the embodiments of the present disclosure may correspond to the transmitting device in the method embodiments of the present disclosure, and the operations and/or functions of the respective units of the transmitting device 1600 are respectively for realizing the corresponding processes of the transmitting device in the method 300 illustrated in FIG. 10 to FIG. 13. For the sake of brevity, it will not be repeated here.

FIG. 17 is a schematic block diagram of a receiving device according to an embodiment of the present disclosure. As illustrated in FIG. 17, the receiving device 1700 includes a communication unit 1700 configured to receive a TA-PPDU transmitted by a transmitting device on a first TXOP, the TA-PPDU including $N$ PPDUs, where each PPDU of the $N$ PPDUs includes a preamble field and a data field, and the preamble field of the $K$-th PPDU of the $N$ PPDUs includes some fields in the preamble field of the first PPDU of the $N$ PPDUs, where $2 \leq K \leq N$, and $N$ is a positive integer greater than 1.

In some embodiments, the preamble field of the first PPDU of the *N* PPDUs includes the following fields: a non-high throughput short training field (L-STF), a non-high throughput long training field (L-LTF), a non-high throughput signal field (L-SIG), a repeated non-high throughput signal field (RL-SIG), a universal signal field (U-SIG), an ultra-high reliability signal field (UHR-SIG), a UHR short training field (UHR-STF), and a UHR long training field (UHR-LTF).

In some embodiments, the preamble field of the *K*-th PPDU of the *N* PPDUs includes some of the following fields: an L-STF field, an L-LTF field, an L-SIG field, an RL-SIG field, a U-SIG field, a UHR-SIG field, a UHR-STF field, and a UHR-LTF field.

In some embodiments, the preamble field of the *N* PPDUs includes an indication field for indicating that a data field of the PPDU carries first-type traffic data or second-type traffic data, a latency requirement of the second-type traffic data being higher than a latency requirement of the first-type traffic data.

In some embodiments, the indication field is carried in the UHR-SIG field.

Optionally, in some embodiments, the above communication unit can be a communication interface or a transceiver, or a communication chip or an input/output interface of a system on chip.

It should be understood that the receiving device 1700 according to the embodiments of the present disclosure may correspond to the receiving device in the method embodiments of the present disclosure, and the operations and/or functions of the respective units of the receiving device 1700 are respectively for realizing the corresponding processes of the receiving device in the method 300 illustrated in FIG. 10 to FIG. 13. For the sake of brevity, it will not be repeated here.

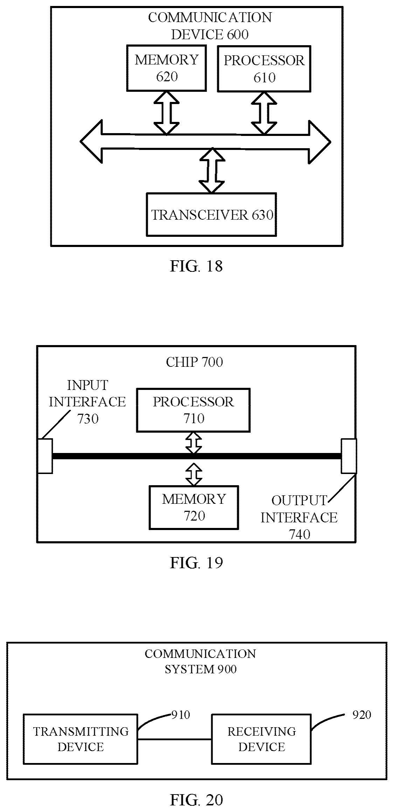

FIG. 18 is a schematic structure diagram of a communication device 600 according to an embodiment of the present disclosure. The communication device 600 illustrated in FIG. 18 includes a processor 610, which can invoke and run a computer program from a memory to implement the methods according to the embodiments of the present disclosure.

Optionally, as illustrated in FIG. 18, the communication device 600 may further include a memory 620. The processor 610 can invoke and run a computer program from the memory 620 to implement the methods according to the embodiments of the present disclosure.

The memory 620 can be a separate device independent of the processor 610, or can be integrated into the processor 610.

Optionally, as illustrated in FIG. 6, the communication device 600 may also include a transceiver 630. The processor 610 can control the transceiver 630 to communicate with other devices, specifically, to send information or data to other devices or receive information or data sent by other devices.

The transceiver 630 may include a transmitter and a receiver. The transceiver 630 may further include one or more antennas.

Optionally, the communication device 600 can specifically be the transmitting device according to the embodiments of the present disclosure, and the communication device 600 can implement the corresponding processes of the transmitting device in the various methods according to the embodiments of the present disclosure. For the sake of brevity, it will not be repeated here.

Optionally, the communication device 600 can specifically be the receiving device according to the embodiments of the present disclosure, and the communication device 600 can implement the corresponding processes of the receiving device in the various methods according to the embodiments of the present disclosure. For the sake of brevity, it will not be repeated here.

FIG. 19 is a schematic structure diagram of a chip according to an embodiment of the present disclosure. The chip 700 illustrated in FIG. 19 includes a processor 710, which can invoke and run a computer program from a memory to implement the methods according to the embodiments of the present disclosure.

Optionally, as illustrated in FIG. 19, the chip 700 may further include a memory 720. The processor 710 can invoke and run a computer program from the memory 720 to implement the methods according to the embodiments of the present disclosure.

The memory 720 can be a separate device independent of the processor 710, or can be integrated into the processor 710.

Optionally, the chip 700 may also include an input interface 730. The processor 710 can control the input interface 730 to communicate with other devices or chips, specifically, to obtain information or data sent by other devices or chips.

Optionally, the chip 700 may further include an output interface 740. The processor 710 can control the output interface 740 to communicate with other devices or chips, specifically, to output information or data to other devices or chips.

Optionally, the chip can be applied to the transmitting device according to the embodiments of the present disclosure, and the chip can implement the corresponding processes of the transmitting device in the various methods according to the embodiments of the present disclosure. For the sake of brevity, it will not be repeated here.

Optionally, the chip can be applied to the receiving device according to the embodiments of the present disclosure, and the chip can implement the corresponding processes of the receiving device in the various methods according to the embodiments of the present disclosure. For the sake of brevity, it will not be repeated here.

It should be understood that the chip mentioned in the embodiments of the present disclosure can also be referred to as a system-on-chip, system chip, chip system, or system-on-chip, etc.

FIG. 20 is a schematic block diagram of a communication system 900 according to an embodiment of the present disclosure. As illustrated in FIG. 20, the communication system 900 includes a transmitting device 910 and a network device 920.

The transmitting device 910 can be configured to implement the corresponding functions of the transmitting device in the above methods, and the receiving device 920 can be configured to implement the corresponding functions of the receiving device in the above methods. For the sake of brevity, it will not be repeated here.

It should be understood that the processor in the embodiments of the present disclosure may be an integrated circuit chip with the capability of processing signals. In the implementation process, the steps of the above method embodiments can be completed through the hardware integrated logic circuit in the processor or in the form of software instructions. The processor mentioned above can be a general-purpose processor, a digital signal processor (DSP), an application-specific integrated circuit (ASIC), a field-programmable gate array (FPGA), or other programmable logic devices, discrete gates or transistor logic devices, discrete hardware components. It can implement or execute the various methods, steps, and logic block diagrams disclosed in the embodiments of the present disclosure. A general-purpose processor can be a microprocessor or any conventional processor, etc. The steps of the method disclosed in the embodiments of the present disclosure can be directly embodied as hardware coding processors to complete, or can be completed by a combination of hardware and software modules in the coding processor. Software modules can be located in random access memory, flash memory, read-only memory, programmable read-only memory, or electrically erasable programmable memory, registers, and other mature storage media in the field. The storage medium is located in the memory, and the processor reads the information in the memory and completes the steps of the above method in combination with its hardware.

It can be understood that the memory in the embodiments of the present disclosure can be volatile memory or non-volatile memory, or can include both volatile and non-volatile memory. The non-volatile memory can be read-only memory (ROM), programmable ROM (PROM), erasable PROM (EPROM), electrically EPROM (EEPROM), or flash memory. Volatile memory can be random access memory (RAM), which is used as an external high-speed cache. By way of example but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and Direct Rambus RAM (DR RAM). It should be noted that the memory described in the system and method of the present disclosure is intended to include, but not be limited to, these and any other suitable types of memory.

It should be understood that the above memories are only examples but not a limitation. For example, the memory in the embodiments of the present disclosure can also be static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and Direct Rambus RAM (DR RAM), etc. That is to say, the memory in the embodiments of the present disclosure is intended to include, but not be limited to, these and any other suitable types of memory.

The embodiments of the present disclosure also provide a computer-readable storage medium for storing a computer program.

Optionally, the computer-readable storage medium can be applied to the transmitting device in the embodiments of the present disclosure, and the computer program enables the computer to execute the corresponding processes of the transmitting device in the various methods of the embodiments of the present disclosure. For the sake of brevity, it will not be repeated here.

Optionally, the computer-readable storage medium can be applied to the receiving device in the embodiments of the present disclosure, and the computer program enables the computer to execute the corresponding processes of the receiving device in the various methods of the embodiments of the present disclosure. For the sake of brevity, it will not be repeated here.

The embodiments of the present disclosure further provide a computer program product, including computer program instructions.

Optionally, the computer program product can be applied to the transmitting device in the embodiments of the present disclosure, and the computer program instructions enable the computer to execute the corresponding processes of the transmitting device in the various methods of the embodiments of the present disclosure. For the sake of brevity, it will not be repeated here.

Optionally, the computer program product can be applied to the receiving device in the embodiments of the present disclosure, and the computer program instructions enable the computer to execute the corresponding processes of the receiving device in the various methods of the embodiments of the present disclosure. For the sake of brevity, it will not be repeated here.

The embodiments of the present disclosure further provide a computer program.

Optionally, the computer program can be applied to the transmitting device in the embodiments of the present disclosure, and when the computer program is run on a computer, it enables the computer to execute the corresponding processes of the transmitting device in the various methods of the embodiments of the present disclosure. For the sake of brevity, it will not be repeated here.

Optionally, the computer program can be applied to the receiving device in the embodiments of the present disclosure, and when the computer program is run on a computer, it enables the computer to execute the corresponding processes of the receiving device in the various methods of the embodiments of the present disclosure. For the sake of brevity, it will not be repeated here.

The ordinary technicians in the field can realize that the units and algorithm steps described in the embodiments disclosed in this description can be implemented in electronic hardware, or a combination of computer software and electronic hardware. Whether these functions are executed in hardware or software depends on the specific application and design constraints of the technical solution. Professionals can use different methods to implement the described functions for each specific application, but such implementation should not be considered beyond the scope of the present disclosure.

Technicians in the field can clearly understand that, for the convenience and conciseness of description, the specific working process of the above-described systems, devices, and units can refer to the corresponding processes in the foregoing method embodiments, and will not be repeated here.

In the several embodiments provided in the present disclosure, it should be understood that the disclosed systems, devices, and methods can be implemented in other ways. For example, the above-described device embodiments are merely illustrative. For example, the division of units is only a logical function division, and there can be other division methods in actual implementation. For example, multiple units or components can be combined or integrated into another system, or some features can be ignored or not executed. Another point is that the coupling or direct coupling or communication connection displayed or discussed between each other can be indirect coupling or communication connection through some interfaces, devices or units, and can be in the form of electrical, mechanical or other forms.

The units described as separate components can be or cannot be physically separated, and the components displayed as units can be or cannot be physical units, that is, they can be located in one place, or can be distributed to multiple network units. Some or all of the units can be selected according to actual needs to achieve the purpose of the solution of this embodiment.

In addition, in the various embodiments of the present disclosure, each functional unit can be integrated into one processing unit, or each unit can exist separately, or two or more units can be integrated into one unit.

If the function is implemented in the form of a software functional unit and sold or used as an independent product, it can be stored in a computer-readable storage medium. Based on such understanding, the technical solution of the present disclosure, essentially, or the part that contributes to the prior art, or a part of the technical solution, can be embodied in the form of a software product. The computer software product is stored in a storage medium and includes several instructions to enable a computer device (which can be a personal computer, a server, or a network device, etc.) to execute all or part of the steps of the methods described in the various embodiments of the present disclosure. The storage medium mentioned above includes: USB drives, mobile hard disks, read-only memory (ROM), random access memory (RAM), magnetic disks, or optical discs, and various other media that can store program code.

The above are only specific implementation manners of the present disclosure, but the scope of protection of the present disclosure is not limited to this. Any changes or substitutions that can be easily thought of by those skilled in the field within the technical scope disclosed in the present disclosure should be covered within the scope of protection of the present disclosure. Therefore, the scope of protection of the present disclosure should be subject to the scope of protection of the claims.

**Claims**

1. A method of wireless communication, comprising:
   transmitting, by a transmitting device, a first physical layer protocol data unit (PPDU) and a second PPDU on a first transmission opportunity (TXOP), the first PPDU being used for transmitting first-type traffic data, the second PPDU being used for transmitting second-type traffic data, a latency requirement of the second-type traffic data being higher than a latency requirement of the first-class traffic data.

2. The method of claim 1, wherein

   the transmitting device is an access point device, a target receiving device of the first PPDU comprises one station device, and a target receiving device of the second PPDU comprises one station device; or
   the transmitting device is an access point device, a target receiving device of the first PPDU comprises $X$ station devices, and a target receiving device of the second PPDU comprises $Y$ station devices, where $X$ and $Y$ are positive integers and $X \geq Y$; or

the transmitting device is a station device, a target receiving device of the first PPDU comprises one access point device, and a target receiving device of the second PPDU comprises one access point device.

3. The method of claim 1 or 2, wherein the first-type traffic data is predetermined to be transmitted through $N_{seg}$ segments, where $N_{seg}$ is a positive integer greater than 1.

4. The method of claim 3, wherein when a number of time-domain symbols $N_{SYS}^{seg}$ used to transmit one segment is greater than a first symbol-number threshold $N_{SYS\,min}^{seg}$, the first-type traffic data is transmitted through $N_{seg}$ segments.

5. The method of claim 3 or 4, further comprising:

determining a number of bits $N_{tail,u}$ in a tail field of an encoder of a target receiving device of the first-type traffic data according to the number of segments $N_{seg}$ used to transmit the first-type traffic data;
determining, according to the number of bits $N_{tail,u}$, a number of time-domain symbols $N_{SYS}$ required to transmit the first-type traffic data; and

determining, according to $N_{SYS}$ and $N_{seg}$, a number of time-domain symbols $N_{SYS}^{seg}$ used to transmit one segment.

6. The method of claim 5, wherein the number of bits $N_{tail,u}$ is equal to $N_{seg} * N_{tail,u,init}$, wherein $N_{tail,u,init}$ represents a number of bits in the tail field of the encoder of the target receiving device of the first-type traffic data when the first-type traffic data is not segmented.

7. The method of claim 5 or 6, wherein determining, according to $N_{SYS}$ and $N_{seg}$, the number of time-domain symbols $N_{SYS}^{seg}$ used to transmit one segment comprises:

rounding a result of dividing $N_{SYS}$ by $N_{seg}$ to obtain the number of time-domain symbols $N_{SYS}^{seg}$ used to transmit one segment.

8. The method of any one of claims 3 to 7, wherein the first PPDU comprises $N_{seg,tx}$ segments in the $N_{seg}$ segments, the $N_{seg,tx}$ segments are segments transmitted prior to the second PPDU, and $N_{seg,tx}$ is a positive integer.

9. The method of any one of claims 3 to 8, wherein the second PPDU is transmitted after a first segment in the $N_{seg}$ segments, wherein an arriving time of the second-type traffic data is within a transmitting duration of the first segment, and the first segment is not a final segment in the $N_{seg}$ segments.

10. The method of claim 9, wherein the first segment contains a first sequence used for indicating that the second-type traffic data is transmitted subsequent to the first sequence.

11. The method of claim 10, wherein

a frequency-domain position occupied by the first sequence is the same as a frequency-domain position and a size occupied by the first-type traffic data; and/or
the first sequence occupies $K$ time-domain symbols, $K$ being a positive integer.

12. The method of claim 11, wherein a duration of time-domain symbols and a duration of a guard interval (GI) occupied by the first sequence are the same as a duration of time-domain symbols and a duration of a GI occupied by the first-type traffic data.

13. The method of any one of claims 1 to 12, wherein the first PPDU comprises a first preamble field and a data field, the first preamble field indicates decoding information of the data field, and the data field is used for carrying at least one segment of the first-type traffic data.

14. The method of any one of claims 1 to 13, wherein the second PPDU comprises a second preamble field and a data field, the second preamble field indicates decoding information of the data field, and the data field is used for carrying data.

15. The method of claim 14, wherein the second preamble field comprises a user field, and the user field comprises an indication field for indicating whether the data field is used for carrying the second-type traffic data.

16. The method of claim 15, wherein the user field is carried in an ultra-high reliability signal (UHR-SIG) field.

17. The method of any one of claims 14 to 16, wherein the second preamble field comprises a part of a first preamble field of the first PPDU.

18. The method of claim 17, wherein the second preamble field comprises a part of following fields:
a non-high throughput short training field (L-STF), a non-high throughput long training field (L-LTF), a non-high throughput signal (L-SIG) field, a repeated non-high throughput signal (RL-SIG) field, a universal signal (U-SIG) field, a UHR-SIG field, an ultra-high reliability short training field (UHR-STF), and an ultra-reliable long training field (UHR-LTF).

19. The method of any one of claims 14 to 16, wherein the second preamble field comprises an entirety of a first preamble field of the first PPDU.

20. The method of claim 19, wherein the second preamble field comprises all of following fields:
an L-STF field, an L-LTF field, an L-SIG field, an RL-SIG field, a U-SIG field, a UHR-SIG field, a UHR-STF field, and a UHR-LTF field.

21. The method of any one of claims 1 to 20, wherein the transmitting device is an access point device, a target receiving device of the first PPDU is a plurality of station devices, and the second PPDU is transmitted on all resource units allocated by the access point device to the plurality of station devices.

22. The method of claim 21, wherein a second preamble field of the second PPDU comprises an entirety of a first preamble field of the first PPDU.

23. The method of claim 21 or 22, further comprising:
after transmitting the first PPDU and the second PPDU, transmitting a third PPDU on a remaining resource of the first TXOP if the remaining resource of the first TXOP is sufficient to transmit at least one segment of the first-type traffic data that has not been transmitted, the third PPDU being used for transmitting the at least one segment that has not been transmitted.

24. The method of claim 23, wherein a size of the remaining resource of the first TXOP is determined according to a duration of the first TXOP, a duration occupied by transmitting the first PPDU, and a duration occupied by transmitting the second PPDU.

25. The method of claim 23 or 24, wherein the third PPDU comprises a third preamble field and a data field, the third preamble segment indicates decoding information of the data field, and the data field is used for carrying the at least one segment of the first-type traffic data that has not been transmitted.

26. The method of claim 25, wherein

the third preamble field of the third PPDU comprises a part of a first preamble field of the first PPDU; or
the third preamble field of the third PPDU comprises a part of the first preamble field of the first PPDU.

27. The method of any one of claims 1 to 20, wherein the transmitting device is an access point device, a target receiving device of the first PPDU is a plurality of station devices, a target receiving device of the second PPDU comprises at least one station device of the plurality of station devices, and the second PPDU is transmitted on a resource allocated by the access point device to the at least one station device.

28. The method of claim 27, wherein

the second preamble field of the second PPDU comprises a part of the first preamble field of the first PPDU; or

the second preamble field of the second PPDU comprises a part of the first preamble field of the first PPDU.

29. The method of claim 27 or 28, wherein the method further comprises:

determining a number of remaining time-domain symbols $N_{SYM,remain}$ according to a number of time-domain symbols $N_{SYS}$ required to transmit the first-type traffic data and a number of time-domain symbols occupied by transmitting the first PPDU; and
padding a physical layer protocol service unit (PSDU) carrying the first-type traffic data or a PSDU carrying the second-type traffic data according to the remaining number of time-domain symbols $N_{SYM,remain}$ and a number of time-domain symbols $N_{SYS,LS}$ required to transmit the second-type traffic data, to obtain the second PPDU.

30. The method of claim 29, wherein padding the PSDU carrying the first-type traffic data or the PSDU carrying the second-type traffic data according to the remaining number of time-domain symbols $N_{SYM,remain}$ and the number of time-domain symbols $N_{SYS,LS}$ required to transmit the second-type traffic data comprises:

if $N_{SYS,LS}$ is greater than or equal to $N_{SYM,remain}$, padding $P$ time-domain symbols after the PSDU carrying the first-type traffic data, where $P$ is a difference between $N_{SYS,LS}$ and $N_{SYM,remain}$; or
if $N_{SYS,LS}$ is less than $N_{SYM,remain}$, padding the PSDU carrying the second-type traffic data.

31. The method of claim 30, wherein padding the PSDU carrying the second-type traffic data comprises:

determining a number of padding symbols according to the difference between $N_{SYM,remain}$ and $N_{SYS,LS}$; and
padding the PSDU carrying the second-type traffic data according to the number of padding symbols.

32. A method of wireless communication, comprising:
receiving, by a receiving device, a first physical layer protocol data unit (PPDU) and a second PPDU transmitted by a transmitting device, the first PPDU being used for transmitting first-type traffic data, the second PPDU being used for transmitting second-type traffic data, a latency requirement of the second-type traffic data being higher than a latency requirement of the first-class traffic data.

33. The method of claim 32, wherein

the transmitting device is an access point device, a target receiving device of the first PPDU comprises one station device, and a target receiving device of the second PPDU comprises one station device; or
the transmitting device is an access point device, a target receiving device of the first PPDU comprises $X$ station devices, and a target receiving device of the second PPDU comprises $Y$ station devices, where $X$ and $Y$ are positive integers and $X \geq Y$; or
the transmitting device is a station device, a target receiving device of the first PPDU comprises one access point device, and a target receiving device of the second PPDU comprises one access point device.

34. The method of claim 32 or 33, wherein the first-type traffic data is predetermined to be transmitted through $N_{seg}$ segments, where $N_{seg}$ is a positive integer greater than 1.

35. The method of claim 34, wherein when a number of time-domain symbols $N_{SYS}^{seg}$ used to transmit one segment is greater than a first symbol-number threshold $N_{SYS\,min}^{seg}$, the first-type traffic data is transmitted through $N_{seg}$ segments.

36. The method of claim 34 or 35, further comprising:

determining a number of bits $N_{tail,u}$ in a tail field of an encoder of a target receiving device of the first-type traffic data according to the number of segments $N_{seg}$ used to transmit the first-type traffic data;
determining, according to the number of bits $N_{tail,u}$, a number of time-domain symbols $N_{SYS}$ required to transmit the first-type traffic data; and

determining, according to $N_{SYS}$ and $N_{seg}$, a number of time-domain symbols $N_{SYS}^{seg}$ used to transmit one segment.

37. The method of claim 36, wherein the number of bits $N_{tail,u}$ is equal to $N_{seg} * N_{tail,u,init}$, wherein $N_{tail,u,init}$ represents a number of bits in the tail field of the encoder of the target receiving device of the first-type traffic data when the first-type traffic data is not segmented.

38. The method of claim 36 or 37, wherein determining the number of time-domain symbols $N_{SYS}^{seg}$ used to transmit one segment according to $N_{SYS}$ and $N_{seg}$ comprises:

   rounding a result of dividing $N_{SYS}$ by $N_{seg}$ to obtain the number of time-domain symbols $N_{SYS}^{seg}$ used to transmit one segment.

39. The method of any one of claims 34 to 38, wherein the first PPDU comprises $N_{seg,tx}$ segments in the $N_{seg}$ segments, the $N_{seg,tx}$ segments are segments transmitted prior to the second PPDU, and $N_{seg,tx}$ is a positive integer.

40. The method of any one of claims 34 to 39, wherein a first segment in the $N_{seg}$ segments contains a first sequence used for indicating that the second-type traffic data is transmitted subsequent to the first sequence.

41. The method of claim 40, wherein the second PPDU is transmitted after the first segment, wherein an arriving time of the second-type traffic data is within a transmitting duration of the first segment, and the first segment is not the final segment in the $N_{seg}$ segments.

42. The method of claim 40 or 41, wherein

   a frequency-domain position occupied by the first sequence is the same as a frequency-domain position and a size occupied by the first-type traffic data; and/or
   the first sequence occupies $K$ time-domain symbols, $K$ being a positive integer.

43. The method of any one of claims 40 to 42, wherein a duration of time-domain symbols and a duration of a guard interval (GI) occupied by the first sequence are the same as a duration of time-domain symbols and a duration of a GI occupied by the first-type traffic data.

44. The method of any one of claims 32 to 43, wherein the first PPDU comprises a first preamble field and a data field, the first preamble field indicates decoding information of the data field, and the data field is used for carrying at least one segment of the first-type traffic data.

45. The method of any one of claims 32 to 44, wherein the second PPDU comprises a second preamble field and a data field, the second preamble field indicates decoding information of the data field, and the data field is used for carrying data.

46. The method of claim 45, wherein the second preamble field comprises a user field, and the user field comprises an indication field for indicating whether the data field is used for carrying the second-type traffic data.

47. The method of claim 46, wherein the user field is carried in an ultra-high reliability signal (UHR-SIG) field.

48. The method of any one of claims 45 to 47, wherein the second preamble field comprises a part of a first preamble field of the first PPDU.

49. The method of claim 48, wherein the second preamble field comprises a part of following fields:
   a non-high throughput short training field (L-STF), a non-high throughput long training field (L-LTF), a non-high throughput signal (L-SIG) field, a repeated non-high throughput signal (RL-SIG) field, a universal signal (U-SIG) field, a UHR-SIG field, an ultra-high reliability short training field (UHR-STF), and an ultra-reliable long training field (UHR-LTF).

50. The method of any one of claims 45 to 47, wherein the second preamble field comprises an entirety of a first preamble field of the first PPDU.

51. The method of claim 50, wherein the second preamble field comprises all of following fields: an L-STF field, an L-LTF field, an L-SIG field, an RL-SIG field, a U-SIG field, a UHR-SIG field, a UHR-STF field, and a UHR-LTF field.

52. The method of any one of claims 32 to 51, wherein the transmitting device is an access point device, a target receiving device of the first PPDU is a plurality of station devices, and the second PPDU is transmitted on all resource units allocated by the access point device to the plurality of station devices.

53. The method of claim 52, further comprising:
after transmitting the first PPDU and the second PPDU, receiving a third PPDU on a remaining resource of the first TXOP if the remaining resource of the first TXOP is sufficient to transmit at least one segment of the first-type traffic data that has not been transmitted, the third PPDU being used for transmitting the at least one segment that has not been transmitted.

54. The method of claim 53, wherein a size of the remaining resource of the first TXOP is determined according to a duration of the first TXOP, a duration occupied by transmitting the first PPDU, and a duration occupied by transmitting the second PPDU.

55. The method of claim 53 or 54, wherein the third PPDU comprises a third preamble field and a data field, the third preamble segment indicates decoding information of the data field, and the data field is used for carrying the at least one segment of the first-type traffic data that has not been transmitted.

56. The method of claim 55, wherein

the third preamble field of the third PPDU comprises a part of a first preamble field of the first PPDU; or
the third preamble field of the third PPDU comprises a part of the first preamble field of the first PPDU.

57. The method of any one of claims 32 to 51, wherein the transmitting device is an access point device, a target receiving device of the first PPDU is a plurality of station devices, a target receiving device of the second PPDU comprises at least one station device of the plurality of station devices, and the second PPDU is transmitted on a resource allocated by the access point device to the at least one station device.

58. A method of wireless communication, comprising:
transmitting, by a transmitting device, a time aggregate physical layer protocol data unit (TA-PPDU) on a first transmission opportunity (TXOP), the TA-PPDU comprising N PPDUs, wherein each PPDU of the $N$ PPDUs comprises a preamble field and a data field, a preamble field of a K-th PPDU of the N PPDUs comprises some fields in a preamble field of the first PPDU of the N PPDUs, $2 \leq K \leq N,$ and $N$ is a positive integer greater than 1.

59. The method of claim 58, wherein the preamble field of the first PPDU of the $N$ PPDUs comprises the following fields: a non-high throughput short training field (L-STF), a non-high throughput long training field (L-LTF), a non-high throughput signal (L-SIG) field, a repeated non-high throughput signal (RL-SIG) field, a universal signal field (U-SIG), an ultra-high reliability signal field (UHR-SIG), a UHR short training field (UHR-STF), and a UHR long training field (UHR-LTF).

60. The method of claim 58 or 59, wherein the preamble field of the K-th PPDU of the $N$ PPDUs comprises some of the following fields: an L-STF field, an L-LTF field, an L-SIG field, an RL-SIG field, a U-SIG field, a UHR-SIG field, a UHR-STF field, and a UHR-LTF field.

61. The method of any one of claims 58 to 60, wherein the transmitting device acquires the first TXOP for transmitting first-type traffic data, $L$ PPDUs of the $N$ PPDU are used for transmitting second-type traffic data, and a latency requirement of the second-type traffic data is higher than a latency requirement of the first-type traffic data, L being a positive integer.

62. The method of claim 4, wherein the $L$ PPDUs are transmitted before a first PPDU, an arriving time of the second-type traffic data is within a transmission duration of the first PPDU, and the first PPDU is not the final PPDU of the N PPDUs.

63. The method of any one of claims 58 to 62, wherein the preamble field of the $N$ PPDUs includes an indication field for indicating that a data field of the PPDU carries first-type traffic data or second-type traffic data, and a latency requirement of the second-type traffic data is higher than a latency requirement of the first-type traffic data.

64. The method of claim 63, wherein the indication field is carried in a UHR-SIG field.

65. A method of wireless communication, comprising:
receiving, by a receiving device, a time aggregate physical layer protocol data unit (TA-PPDU) transmitted by a transmitting device on a first transmission opportunity (TXOP), the TA-PPDU comprising N PPDUs, wherein each PPDU of the N PPDUs comprises a preamble field and a data field, a preamble field of a K-th PPDU of the N PPDUs comprises some fields in the preamble field of the first PPDU of the N PPDUs, $2 \leq K \leq N$, and N is a positive integer greater than 1.

66. The method of claim 65, wherein the preamble field of the first PPDU of the N PPDUs comprises the following fields: a non-high throughput short training field (L-STF), a non-high throughput long training field (L-LTF), a non-high throughput signal (L-SIG) field, a repeated non-high throughput signal (RL-SIG) field, a universal signal (U-SIG) field, an ultra-high reliability signal (UHR-SIG) field, a UHR short training field (UHR-STF), and a UHR long training field (UHR-LTF).

67. The method of claim 65 or 66, wherein the preamble field of the K-th PPDU of the N PPDUs comprises some of the following fields: an L-STF field, an L-LTF field, an L-SIG field, an RL-SIG field, a U-SIG field, a UHR-SIG field, a UHR-STF field, and a UHR-LTF field.

68. The method of any one of claims 65 to 67, wherein the preamble field of the N PPDUs comprises an indication field for indicating that a data field of the PPDU carries first-type traffic data or second-type traffic data, and a latency requirement of the second-type traffic data is higher than a latency requirement of the first-type traffic data.

69. The method of claim 68, wherein the indication field is carried in a UHR-SIG field.

70. A transmitting device, comprising:
a communication unit configured to transmit a first physical layer protocol data unit (PPDU) and a second PPDU on a first transmission opportunity (TXOP), the first PPDU being used for transmitting first-type traffic data, the second PPDU being used for transmitting second-type traffic data, a latency requirement of the second-type traffic data being higher than a latency requirement of the first-class traffic data.

71. A receiving device, comprising:
a communication unit configured to receive a first physical layer protocol data unit (PPDU) and a second PPDU transmitted by a transmitting device, the first PPDU being used for transmitting first-type traffic data, the second PPDU being used for transmitting second-type traffic data, a latency requirement of the second-type traffic data being higher than a latency requirement of the first-class traffic data.

72. A transmitting device, comprising:
a communication unit configured to transmit a time aggregate physical layer protocol data unit (TA-PPDU) on a first transmission opportunity (TXOP), the TA-PPDU comprising N PPDUs, wherein each PPDU of the N PPDUs comprises a preamble field and a data field, the preamble field of the K-th PPDU of the N PPDUs comprises some fields in the preamble field of the first PPDU of the N PPDUs, $2 \leq K \leq N$, and N is a positive integer greater than 1.

73. A receiving device, comprising:
a communication unit configured to receive a time aggregate physical layer protocol data unit (TA-PPDU) transmitted by a transmitting device on a first transmission opportunity (TXOP), the TA-PPDU comprising N PPDUs, wherein each PPDU of the N PPDUs comprises a preamble field and a data field, the preamble field of the K-th PPDU of the N PPDUs comprises some fields in the preamble field of the first PPDU of the N PPDUs, $2 \leq K \leq N$, and N is a positive integer greater than 1.

74. A transmitting device, comprising a processor and a memory, wherein the memory is configured to store a computer program, and the processor is configured to invoke and run the computer program stored in the memory to execute the method of any one of claims 1 to 31 or the method of any one of claims 58 to 64.

75. A receiving device, comprising a processor and a memory, wherein the memory is configured to store a computer program, and the processor is configured to invoke and run the computer program stored in the memory to execute the method of any one of claims 32 to 57 or the method of any one of claims 65 to 69.

76. A chip, comprising a processor configured to invoke and run a computer program from a memory to cause a device installed with the chip to execute the method of any one of claims 1 to 31, or the method of any one of claims 32 to 57, or the method of any one of claims 58 to 64, or the method of any one of claims 65 to 69.

77. A computer-readable storage medium configured to store a computer program that causes a computer to execute the method of any one of claims 1 to 31, or the method of any one of claims 32 to 57, or the method of any one of claims 58 to 64, or the method of any one of claims 65 to 69.

78. A computer program product comprising computer program instructions that are operable to cause a computer to execute the method of any one of claims 1 to 31, or the method of any one of claims 32 to 57, or the method of any one of claims 58 to 64, or the method of any one of claims 65 to 69.

79. A computer program operable to cause a computer to execute the method of any one of claims 1 to 31, or the method of any one of claims 32 to 57, or the method of any one of claims 58 to 64, or the method of any one of claims 65 to 69.

FIG. 1

8µs | 8µs | 4µs | 4µs | 8µs | 4µs per symbol | | | Variable durations per UHR-LTF symbol

L-STF | L-LTF | L-SIG | RL-SIG | U-SIG | UHR-SIG | UHR-STF | UHR-LTF | UHR-LTF | Data | PE

FIG. 2

| A-MPDU subframe 1 | A-MPDU subframe 2 | ... | A-MPDU subframe n | EOF Padding |
|---|---|---|---|---|

| PHY Preamble | PSDU |
|---|---|

FIG. 3

<u>200</u>

| Transmitting device | Receiving device |
|---|---|

S210，first PPDU and second PPDU, where the first PPDU is used for transmitting first-type traffic data, the second PPDU is used for transmitting second-type traffic data, and a latency requirement of the second-type traffic data is higher than that of the first-type traffic data

FIG. 4

FIG. 5

FIG. 6

FIG. 7

| UHR-STF | UHR-LTF | Data | PE |
|---------|---------|------|-----|

FIG. 8

Second-type traffic data of
STA 1 and STA 2 arriving

*SignalExtension*
(if present)

f

320MHz

| Preamble | STA4 PSDU Segment 1 | PSDU Segment 2 | | SIFS | Preamble | STA4 PSDU Segment 3 | PSDU Segment 4 | PSDU Segment 5 | PSDU Segment 6 | PSDU Segment 7 | PE | |
|---|---|---|---|---|---|---|---|---|---|---|---|---|
| | STA3 PSDU Segment 1 | PSDU Segment 2 | | | | STA3 PSDU Segment 3 | PSDU Segment 4 | PSDU Segment 5 | PSDU Segment 6 | PSDU Segment 7 | | |
| | STA2 PSDU Segment 1 | PSDU Segment 2 | | | | STA2 LS PSDU | | | | | | |
| 80MHz | STA1 PSDU Segment 1 | PSDU Segment 2 | | | | STA1 LS PSDU | | | | | | |

First sequence in PSDU Segment 2

Second PPDU

t

FIG. 9

<u>300</u>

| Transmitting device | Receiving device |
| --- | --- |

S310, TA-PPDU including $N$ PPDUs, where each of the $N$ PPDUs includes a preamble field and a data field, a preamble field of a $K$-th PPDU of the $N$ PPDUs includes part of the preamble field of the first PPDU of the $N$ PPDUs, $2 \leq K \leq N$, and $N$ is a positive integer greater than 1

FIG. 10

SignalExtension
(if present)

|←——1st PPDU——→|←——2nd PPDU——→|←——3rd PPDU——→| |←——Nth PPDU——→|

| Preamble | Data | Short Preamble | Data | Short Preamble | Data | ... | Short Preamble | Data | PE | |

FIG. 11

| L-STF | L-LTF | L-SIG | RL-SIG | U-SIG | UHR-SIG | UHR-STF | UHR-LTF | Data | L-SIG | U-SIG | UHR-SIG | Data | ... | L-SIG | U-SIG | UHR-SIG | Data | PE | |

1st PPDU — 2nd PPDU — Nth PPDU

SignalExtension (if present)

FIG. 12

FIG. 13

TRANSMITTING
DEVICE 400

COMMUNICATION
UNIT 410

FIG. 14

RECEIVING
DEVICE 500

COMMUNICATION
UNIT 510

FIG. 15

TRANSMITTING
DEVICE 1600

COMMUNICATION
UNIT 1610

FIG. 16

TRANSMITTING
DEVICE 1700

COMMUNICATION
UNIT 1710

FIG. 17

COMMUNICATION
DEVICE 600

MEMORY
620

PROCESSOR
610

TRANSCEIVER 630

FIG. 18

CHIP 700

INPUT
INTERFACE
730

PROCESSOR
710

MEMORY
720

OUTPUT
INTERFACE
740

FIG. 19

COMMUNICATION
SYSTEM 900

TRANSMITTING
DEVICE

910

RECEIVING
DEVICE

920

FIG. 20

## INTERNATIONAL SEARCH REPORT

| International application No. |
| --- |
| **PCT/CN2023/075221** |

| **A.** | **CLASSIFICATION OF SUBJECT MATTER** |
| --- | --- |

H04W 28/02(2009.01)i

According to International Patent Classification (IPC) or to both national classification and IPC

| **B.** | **FIELDS SEARCHED** |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTX; CNKI; VEN; USTXT; EPTXT; WOTXT; 3GPP: 传输, 机会, 时机, 物理层协议数据单元, 时延, 延迟, 前导, 抢占, 暂停, 中止, 中断, 终止, 时域, 聚合, TXOP, PPDU, latency, preamble, truncate, preempt, suspend, terminate, time aggregate

| **C.** | **DOCUMENTS CONSIDERED TO BE RELEVANT** | | |
| --- | --- | --- | --- |
| Category* | Citation of document, with indication, where appropriate, of the relevant passages | | Relevant to claim No. |
| X | WO 2022090440 A1 (SONY GROUP CORP. et al.) 05 May 2022 (2022-05-05) description, paragraphs [0017]-[0063] | | 1-79 |
| X | US 2022361190 A1 (SAMSUNG ELECTRONICS CO., LTD.) 10 November 2022 (2022-11-10) description, paragraphs [0038]-[0054] | | 1-79 |
| X | CN 112423399 A (HUAWEI TECHNOLOGIES CO., LTD.) 26 February 2021 (2021-02-26) description, paragraphs [0125]-[0320] | | 1-57, 70-71, 74-79 |
| X | CN 114430575 A (HUAWEI TECHNOLOGIES CO., LTD.) 03 May 2022 (2022-05-03) description, paragraphs [0083]-[0163] | | 1-57, 70-71, 74-79 |
| A | WO 2022165818 A1 (GUANGDONG OPPO MOBILE TELECOMMUNICATIONS CORP., LTD.) 11 August 2022 (2022-08-11) entire document | | 1-79 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **15 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/075221**

| Patent document cited in search report | | | Publication date (day/month/year) | Patent family member(s) | | | Publication date (day/month/year) |
|---|---|---|---|---|---|---|---|
| WO | 2022090440 | A1 | 05 May 2022 | EP | 4238382 | A1 | 06 September 2023 |
| US | 2022361190 | A1 | 10 November 2022 | DE | 102022110848 | A1 | 10 November 2022 |
| | | | | KR | 20220151121 | A | 14 November 2022 |
| CN | 112423399 | A | 26 February 2021 | EP | 4013170 | A1 | 15 June 2022 |
| | | | | EP | 4013170 | A4 | 05 October 2022 |
| | | | | WO | 2021036648 | A1 | 04 March 2021 |
| CN | 114430575 | A | 03 May 2022 | WO | 2022089508 | A1 | 05 May 2022 |
| WO | 2022165818 | A1 | 11 August 2022 | WO | 2022166157 | A1 | 11 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AP 110